# EUROPÄISCHE PATENTSCHRIFT

(11) **EP 2 710 288 B1**
(45) Veröffentlichungstag und Bekanntmachung des Hinweises auf die Patenterteilung: **08.07.2015**
(21) Anmeldenummer: 12720912.0
(22) Anmeldetag: 16.05.2012
(51) Int. Cl.: F16L 53/00

(54) **ROHRLEITUNG ZUR FÖRDERUNG EINER SALZSCHMELZE**
PIPELINE FOR CONVEYING A SALT MELT
CONDUIT TUBULAIRE POUR LE TRANSPORT D'UN SEL FONDU

(30) Priorität: 19.05.2011 EP 11166724; 19.05.2011 US 201161487719 P; 27.09.2011 EP 11182898; 27.09.2011 US 201161539494 P
(43) Veröffentlichungstag der Anmeldung: 26.03.2014
(73) Patentinhaber: BASF SE, 67056 Ludwigshafen (DE)
(72) Erfinder: WORTMANN, Jürgen, 67117 Limburgerhof (DE); LUTZ, Michael, 67346 Speyer (DE); GÄRTNER, Martin, 67549 Worms (DE); SCHIERLE-ARNDT, Kerstin, 64673 Zwingenberg (DE); MAURER, Stephan, 67435 Neustadt-Gimmeldingen (DE); LADENBERGER, Michael, 67071 Ludwigshafen (DE); GEYER, Karolin, 68163 Mannheim (DE); GARLICHS, Florian, 67435 Neustadt (DE)
(86) Internationale Anmeldenummer: PCT/EP2012/059185
(87) Internationale Veröffentlichungsnummer: WO 2012/156472

(56) Entgegenhaltungen:
- EP-A1- 1 958 832
- EP-A1- 2 006 593
- WO-A1-2007/000569
- DE-A1- 10 327 493
- DE-B1- 1 515 139
- DE-C- 859 549
- JP-A- 8 320 096
- SU-A1- 540 102
- US-B1- 6 167 883

## Beschreibung

Die Erfindung geht aus von einer Rohrleitung zur Förderung einer Salzschmelze mit einer gegenüber auftretenden Temperaturen stabilen Rohrwand.

Rohrleitungen, die von einer Salzschmelze durchströmt werden, sollen zum Beispiel in Solarkraftwerken, insbesondere Parabolrinnen-Solarkraftwerken eingesetzt werden. Die Rohrleitungen sind dabei zu Netzwerken geschaltet, die der Erfassung solarer Energie im Solarkraftwerk dienen. In einem derartigen Solarkraftwerk wird die Strahlungsenergie der Sonne mittels Parabolspiegeln auf Receiver konzentriert. Die Kombination von Parabolspiegel und Receiver wird Kollektor genannt. Eine Reihe von Kollektoren wird zu Solarschleifen in Reihe geschaltet. Die von den Receivern erfasste Strahlungsenergie wird auf eine Wärmeträgerflüssigkeit übertragen. Derzeit wird als Wärmeträgerflüssigkeit insbesondere ein Biphenyl/Diphenylether-Gemisch eingesetzt, das jedoch durch seine Zersetzungstemperatur von ca. 400 °C in seiner maximalen Betriebstemperatur begrenzt ist. Um höhere Betriebstemperaturen, die einen höheren Wirkungsgrad ermöglichen, zu erhalten, sind andere Wärmeträgerflüssigkeiten erforderlich. Hierzu werden insbesondere Salzschmelzen, beispielsweise sogenanntes Solarsalz 60, ein Gemisch aus Natriumnitrat und Kaliumnitrat im Verhältnis von 60:40 eingesetzt.

Nachteil von Salzschmelzen ist jedoch, dass diese hochschmelzend sind. Eine Natrium/Kaliumnitratmischung schmilzt zum Beispiel im Eutektikum, das heißt bei einem Mischungsverhältnis von 56:44 bei einer Temperatur von 218 °C. In langen Rohrleitungsnetzwerken, wie diese in Solarkraftwerken auftreten, sind Salzschmelzen mit hohen Schmelzpunkten schwierig sicher zu betreiben. Das Einfrieren der Salzschmelze kann in Rohrleitungssystemen große wirtschaftliche Schäden verursachen. Ursache der Schäden ist zum Beispiel die starke Volumenausdehnung von Salzschmelzen beim Aufschmelzen. Es besteht die Gefahr, dass Armaturen und Rohrleitungen aufgedrückt und stark beschädigt werden.

Wenn die Salzschmelze einfriert, was grundsätzlich außerhalb der Betriebszeiten des Solarkraftwerks, das heißt außerhalb der Strahlungszeiten der Sonne erfolgen kann, kommt es zu einer Volumenkontraktion, die in Abhängigkeit vom Rohrleitungsverbund und Betriebszustand zu einem unterschiedlichen Erstarrungszustand führen kann. Es wird erwartet, dass im Allgemeinen evakuierte Blasen in der Rohrleitung entstehen, die zu mehr oder minder größeren Einheiten zusammenlaufen. Beim Wiederaufschmelzen kann durch gegebenenfalls große räumliche Entfernung zwischen den Aufschmelzstellen mit Volumenexpansion und den evakuierten Bereichen kein ausreichender Volumenausgleich erfolgen, um auftretende Drücke abzubauen.

Um ein Einfrieren der Salzschmelze zu verhindern, ist es derzeit üblich, bei längeren Stillstandszeiten das Rohrleitungssystem zu entleeren. Alternativ ist es auch möglich, das Rohrleitungssystem zu beheizen. Hierzu kann zum Beispiel elektrische Energie eingesetzt werden oder Wärme aus verfügbaren Wärmespeichern genutzt werden. Wenn Wärme aus verfügbaren Wärmespeichern genutzt wird, wird üblicherweise eine heiße Wärmeträgerflüssigkeit durch das Rohrleitungssystem gepumpt. Diese Verfahren haben den Nachteil, dass dazu erhebliche Mengen an Energie in Form von elektrischer Energie beziehungsweise in Form von Wärmeenergie aufgebracht werden müssen.

Wenn eine elektrische Beheizung vorgesehen ist, so wird diese derzeit üblicherweise durch Beilegen hoch temperaturbeständiger mineralisolierter elektrischer Heizleiter zu den Rohrleitungen realisiert. Bei Solarreceivern, wie sie in Parabolrinnen-Solarkraftwerken eingesetzt werden, kann diese Technik jedoch nicht angewendet werden, da die einzelnen Receiver durch einen evakuierten Glasmantel sehr gut gegen die Umgebung thermisch isoliert sind. Derzeit werden Receiver deshalb dadurch elektrisch beheizt, dass das Rohrleitungssystem selbst bei niedriger Spannung mit einer hohen Stromstärke beaufschlagt wird. Dies hat jedoch den Nachteil, dass an den Rohrleitungsverbindern unterschiedlich hohe Übergangswiderstände oder thermische Verluste auftreten können. An den Stellen mit einem hohen Widerstand tritt eine stärkere Erwärmung auf. Es besteht die Gefahr einer ungleichmäßigen Beheizung und einer lokalen Unterschreitung der Schmelztemperatur des als Wärmeträger eingesetzten Salzes.

Innenheizleiter sind zum Frostschutz von Wasserrohrleitungssystemen mit breiter Anwendung zum Beispiel in Skandinavien bekannt. Dabei wird ein isolierter elektrischer Heizleiter lose in das zu schützende Rohrleitungssystem gelegt. Bei Frostgefahr verhindert der Heizleiter das Einfrieren der Rohrleitungen. Dieses Verfahren ist wärmetechnisch effizienter als eine Beheizung von außen. Ein solcher in die Rohrleitung eingelegter Heizleiter lässt sich jedoch nicht für Salzschmelze führende Rohrleitungen anwenden. Abgesehen von der viel höheren Einsatztemperatur und den oxidierenden Bedingungen einer Salzschmelze schützt der Innenleiter in Wassersystemen vor der Volumenexpansion beim Einfrieren. Im Unterschied dazu tritt jedoch die Volumenexpansion bei Salzschmelzen nicht beim Einfrieren sondern beim Schmelzen auf.

Insbesondere vor Inbetriebnahme ist es notwendig, das Rohrleitungssystem, das das Salz führt, zu beheizen. Wenn hierzu das Rohrleitungssystem selbst mit einer Spannung beaufschlagt wird, ist es notwendig, vor der Inbetriebnahme des Solarkraftwerkes die gesamte Stahlmasse des Rohrleitungssystems auf eine Temperatur deutlich oberhalb des Schmelzpunkts des Salzes zu bringen. Hierzu wird eine große Energiemenge benötigt.

Um Solarkraftwerke mit langen Rohrleitungen ohne Erstarren der Salzschmelze zu handhaben, wird derzeit versucht, alternativ zum Solarsalz niedriger schmelzende Salze einzusetzen. Dies hat jedoch den Nachteil, dass die Salze eine geringere thermische Stabilität aufweisen und den Einsatzbereich auf Temperaturen unter 500 °C einschränken. Dies führt zu einem gegenüber Solarsalzen niedrigeren Wirkungsgrad des Solarkraftwerkes.

Zudem ist es notwendig, die niedriger schmelzenden Wärmeträgersalze in geschlossenen Systemen zu halten, was zu einem zusätzlichen Aufwand führt, da Inertisierungssysteme im Solarfeld verlegt werden müssen. Eine Inertisierung ist insbesondere dann notwendig, wenn Nitrit-haltige Mischungen als Wärmeträgersalz eingesetzt werden, da das Nitrit in Gegenwart von Luft mit Sauerstoff zu Nitrat oxidieren kann und damit der Festpunkt des Salzes unkontrolliert steigen kann. Wenn Calcium-haltige Salzmischungen eingesetzt werden, kann das Calcium mit Kohlenstoffdioxid, das in der Luft enthalten ist, zu unlöslichem Calciumcarbonat reagieren.

Weiterhin kann durch Zusatz von Nitraten der Elemente Lithium, Rubidium und Cäsium der Schmelzpunkt von Solarsalz erniedrigt werden. Diese Salze sind jedoch nur in geringem Umfang erhältlich und nicht in den Mengen, wie sie für Solarkraftwerke insbesondere mit Wärmespeichern benötigt werden, wirtschaftlich verfügbar.

Aufgabe der Erfindung ist es, eine Rohrleitung zur Förderung einer Salzschmelze bereitzustellen, die es erlaubt, in der Rohrleitung erstarrtes Wärmeträgersalz wieder aufzuschmelzen, ohne Schäden an der Rohrleitung zu verursachen. Eine weitere Aufgabe der Erfindung ist es, die Wärmeabstrahlung eines Solarfeldes bei Stillstand, zum Beispiel über Nacht, durch Absenkung der Betriebstemperatur des Wärmeträgersalzes zu vermindern.

Gelöst wird die Aufgabe durch eine Rohrleitung zur Förderung einer Salzschmelze mit einer gegenüber auftretenden Temperaturen stabilen Rohrwand, wobei im Inneren der Rohrleitung ein Heizleiter zur Beheizung geführt ist, wobei der Heizleiter nicht an der Innenwand der Rohrleitung anliegt.

Durch den Einsatz eines Heizleiters im Inneren der Rohrleitung ist es möglich, entlang des Heizleiters erstarrtes Salz innerhalb der Rohrleitung gleichmäßig aufzuschmelzen, so dass sich um den Heizleiter ein Kanal bildet, durch den geschmolzenes Salz abtransportiert werden kann. Hierdurch wird vermieden, dass aufgrund der Volumenausdehnung der Salzschmelze zu hohe Drücke auf die Rohrleitung ausgeübt werden. Eine gleichmäßige Temperaturverteilung entlang des Heizleiters führt zudem dazu, dass das Salz um den Heizleiter über die gesamte Länge der Rohrleitung gleichzeitig schmilzt und so auch ein Kanal gebildet wird, durch den Salzschmelze strömen kann und so der Druck ausgeglichen werden kann.

Eine ähnliche Rohrleitung ist z.B. aus Dokument DE 859549 bekannt.

Die erfindungsgemäße Rohrleitung, durch die ein Heizleiter geführt ist, findet Einsatz insbesondere bei Solarkraftwerken, beispielsweise Parabolrinnen-Solarkraftwerken. In solchen Kraftwerken verlaufen die Rohrleitungen im Allgemeinen im Wesentlichen waagerecht, d.h. mit einer Steigung von weniger als 5°, üblicherweise von weniger als 1°.

Die einzelnen Rohrleitungen in einem solchen Solarkraftwerk weisen jeweils krümmungsfreie Strecken mit einer Länge von mindestens bis zu 100 m, üblicherweise bis zu 300 m, auf. Durch die großen geraden Strecken ist es möglich, einen Heizleiter in das Rohr einzulegen, ohne dass dieser um Rohrbögen geführt werden muss.

In einer bevorzugten Ausführungsform ist der Heizleiter im Rohr azentrisch angeordnet, wobei der Abstand des Heizleiters bei einem mit einer maximalen Steigung von 45° verlaufenden Rohrabschnitt nach unten größer ist als nach oben. Durch das azentrische Einlegen des Heizleiters im Rohr wird vermieden, dass bei einer temperaturbedingten Längenausdehnung des Heizleiters entstehende durchhängende Bereiche des Heizleiters zwischen zwei Befestigungsstellen dazu führt, dass der Heizleiter die Innenwandung der Rohrleitung berührt. Auch im Falle des Durchhängens ist es notwendig, dass der Heizleiter keinen direkten Kontakt zur Innenwandung der Rohrleitung aufweist. Zur Befestigung des Heizleiters ist es zum Beispiel möglich, diesen in Ösen in der von der Salzschmelze durchströmten Rohrleitung zu führen.

Bei einer Steigung von mehr als 45°, insbesondere bei senkrecht verlaufenden Rohrleitungsabschnitten, ist es bevorzugt, wenn der Heizleiter zentrisch in der Rohrleitung verläuft.

Um zu vermeiden, dass der Heizleiter, der sich aufgrund der hohen Temperatur in seiner Länge ausgedehnt hat, mit der Salzschmelze mitgerissen wird und insbesondere in Strömungsrichtung gesehen am Anfang der Rohrleitung gespannt wird, ist es bevorzugt, auf den Heizleiter einen Isolator aufzubringen und den Heizleiter mit dem Isolator in der Öse zu befestigen. Hierdurch wird sichergestellt, dass der Heizleiter immer mit der gleichen Stelle in der Öse befestigt ist. Ein Durchziehen des Heizleiters durch die Ösen aufgrund der strömenden Salzschmelze wird vermieden. Hierdurch kann ein Reißen des Heizleiters aufgrund auftretender Spannungen beim Abkühlen, wenn sich der Heizleiter wieder zusammenzieht, vermieden werden. Das Zusammenziehen des Heizleiters kann insbesondere dann zu Problemen führen, wenn der mitgerissene Teil beim Erstarren der Salzschmelze im erstarrten Salz fixiert wird und sich der Heizleiter nicht mehr bewegen kann.

Alternativ zu einer Befestigung des Heizleiters mit einer Öse ist es auch möglich, den Heizleiter mit federnden Abstandshaltern im Inneren des Rohres zu befestigen. Hierbei ist es insbesondere bevorzugt, den Heizleiter jeweils mit mindestens drei, bevorzugt vier Abstandshaltern, die kreuzförmig am Heizleiter befestigt sind, in der Rohrwand zu befestigen. Die Abstandshalter können an der Rohrwand befestigt werden, zum Beispiel lösbar mit Schrauben oder unlösbar mit einer Schweißverbindung. Bevorzugt ist es jedoch, die Abstandshalter nicht mit der Rohrwand zu verbinden. In diesem Fall wird der Leiter mit den Abstandshaltern zusätzlich zu den Ösen im Inneren der Rohrleitung fixiert.

In einer weiteren alternativen Ausführungsform sind an dem Heizleiter Schlingen angebracht, die in Befestigungshaken eingehängt werden, um den Heizleiter in der Rohrleitung zu befestigen. Durch das Anbringen der Schlingen wird eine Befestigung des Heizleiters erzielt, bei der es vermieden wird, dass der Heizleiter durch die strömende Salzschmelze verschoben wird. Die Befestigung der Schlingen am Heizleiter kann zum Beispiel durch Verschweißen erfolgen. Hierzu ist es zum Beispiel möglich, eine Hülse über den Heizleiter zu ziehen, die mit dem Heizleiter verschweißt wird, und an der Hülse die Schlinge anzubringen. Neben dem Anschweißen der Hülse ist es auch möglich, eine Klemmhülse zu verwenden, die beispielsweise mit dem Heizleiter verklemmt wird.

Um beim Aufschmelzen des Salzes möglichst schnell einen Kanal zu bilden, durch den das aufgeschmolzene Salz strömen kann, ist es bevorzugt, den Heizleiter in Form eines Rohres oder eines Kanals mit einem beliebigen Querschnitt zu gestalten und die Wandung des Rohres bzw. des Kanals mit Öffnungen zu versehen, durch die aufgeschmolzenes Salz ins Innere des in Form eines Rohres oder Kanals gestalteten Heizleiters strömen kann und im Inneren des Heizleiters transportiert wird.

Neben einer massiven Außenwand, die mit Öffnungen versehen wird, ist es alternativ auch möglich, den Heizleiter zum Beispiel als ringförmiges Gestrick oder Gewebe zu gestalten. Auch hierzu wird im Inneren des Gewebes oder Gestrickes ein Hohlraum gebildet, durch den bereits geschmolzenes Salz strömen kann.

Alternativ zur Gestaltung des Heizleiters als Hohlkörper, in dessen Inneren ein Kanal gebildet wird, durch den die Salzschmelze strömen kann, ist es auch möglich, dass der Heizleiter mindestens eine sich in axialer Richtung erstreckende u-förmige oder v-förmige Vertiefung aufweist. In der Vertiefung wird das Salz zuerst schmelzen, so dass die Vertiefung einen Kanal bildet, durch den das geschmolzene Salz strömen kann. Ein Heizleiter mit mehr als einer u-förmigen oder mehr als einer v-förmigen Vertiefung kann zum Beispiel einen sternförmigen Querschnitt aufweisen. Auch ist es möglich, dass ein solcher Heizleiter zum Beispiel in Form eines Kanals mit einem u-förmigen Querschnitt gestaltet ist.

Neben einem Hohlkörper oder einem Heizleiter, der mindestens eine u-förmige oder v-förmige Vertiefung aufweist, ist es weiterhin auch möglich, zum Beispiel einen massiven elektrischen Leiter vorzusehen, der mit einem Drahtgeflecht umwickelt ist. In diesem Fall kann das geschmolzene Salz zunächst im Drahtgeflecht strömen, bevor sich außerhalb des Drahtgeflechts ein den Heizleiter umgebender Kanal ausgebildet hat.

Neben den vorstehend genannten Möglichkeiten ist es selbstverständlich auch möglich, dass der Heizleiter ein massiver Draht ist oder in Form eines Seils gestaltet ist. Auch kann der Heizleiter aus einem Material guter elektrischer Leitfähigkeit, beispielsweise Kupfer oder Aluminium gebildet sein, das von einer korrosionsfesten Hülle umschlossen ist. Hierdurch wird vermieden, dass das gut elektrisch leitfähige Material in Gegenwart des Salzes, das durch die Rohrleitung strömt, korrodiert, wodurch das Wärmeträgersalz verschmutzt wird und seine thermische Beständigkeit verliert.

Weiterhin ist es auch möglich, einen konventionellen Leiter, zum Beispiel mit stromführender Seele und elektrischer Isolierung, als Innenheizleiter einzusetzen, wobei auf die elektrische Isolierung zusätzlich eine korrosionsfeste Hülle aufgebracht wird. Eine schützende Metallhülle als korrosionsfeste Hülle kann in diesem Fall auch als Rückleiter für den Strom dienen. Alternativ ist auch eine Zweiseelenanordnung mit isolierter Außenhülle aus Edelstahl verwendbar. Solche isolierten Heizleiter können auch an der Wand der Rohrleitung anliegen.

Wird ein steifer Leiter, zum Beispiel ein starrer Stab, eingesetzt, sind ein oder mehrere Dehnungsbereiche vorzusehen, um Dehnungen durch Temperaturschwankungen während des Betriebes ausgleichen zu können. Vorteil des Einsatzes eines steifen Leiters ist, dass dieser innerhalb des Rohrleitungssystems weniger Halterungen, die ein Verschieben in Strömungsrichtung verhindern, benötigt als ein flexibler Leiter.

Der Leiter kann auch aus Segmenten aufgebaut sein, beispielsweise ein Segment pro Receiver, die bei Montage miteinander elektrisch leitend verbunden werden, zum Beispiel durch Verschrauben, Verschweißen oder Verklemmen. Der Aufbau von Segmenten bietet auch ein Konzept bei Ersatz eines Receivers innerhalb einer Reihe durch Schneiden und Wiederverbinden. Die Verbindungen müssen so gestaltet werden, dass ausreichend niedrige Übergangswiderstände realisiert werden.

Wenn der Heizleiter in Form eines Seiles ausgebildet ist, werden ein oder mehrere Litzen zu einem Seil verdreht. Das Seil ist vorzugsweise mehrlitzig. Durch das Verdrehen der Litzen zu einem Seil entsteht in der Mitte des Seiles ein Zwickelkanal, durch den bereits geschmolzenes Salz strömen kann und so der Druck ausgeglichen werden kann. Durch Verdrehung eines Seils mit einer Litze kann eine Spiralwicklung gefertigt werden, die in ihrer Mitte einen Zwickelkanal besitzt. Ein weiterer Vorteil des Einsatzes eines Seils ist, dass der horizontale Ausgleich der thermischen Ausdehnung erleichtert werden kann. Zudem ist es möglich, durch die Art der Verseilung die Steifigkeit des Leiters einzustellen, so dass bei entsprechender Verdrillung das Seil eine Festigkeit aufweist, die sich der Festigkeit eines steifen Leiters annähert. Dies erlaubt es, eine geringere Anzahl an Halterungen vorzusehen, die das Seil gegen Verschiebung in Strömungsrichtung sichern.

Die Litzen, aus denen das Seil verdrillt wird, können in Form von Drähten, das heißt massiv, gestaltet sein oder auch als Rohre ausgebildet sein. Wenn die Litzen in Form von Rohren gestaltet und nicht durch hoch elektrisch leitfähiges Material oder einen strömenden Wärmeträger gefüllt sind, so werden diese jeweils an den Enden vorzugsweise durch Schweißen verschlossen. Die einzelnen Rohre sind vorzugsweise mit einem Gas, beispielsweise Luft gefüllt. Durch das Gas in den rohrförmigen Litzen wird der Auftrieb in der Salzschmelze erhöht. Dies erlaubt eine Verringerung der Haltekraft der zum Fixieren nahe der Rohrmitte benötigten Federn. Die geringsten Abtriebskräfte entstehen, wenn die mittlere Dichte der rohrförmigen Litzen der Dichte der Salzschmelze von 1.800 kg/m³ entspricht. Die rohrförmigen Litzen können einen kreisförmigen Querschnitt oder einen nicht kreisförmigen Querschnitt aufweisen. Ein nicht kreisförmiger Querschnitt ist zum Beispiel ein ovaler oder ein elliptischer Querschnitt. Bei einem nicht kreisförmigen Querschnitt ist es möglich, dass beim Aufschmelzen des Salzes örtlich auftretende erhöhte Drücke besser elastisch abgefedert werden können. Zudem wird durch nicht kreisförmige Querschnitte der Zwickelquerschnitt vergrößert und dadurch die Druckausgleichströmung im Zickelkanal erleichtert. Um einen nicht kreisförmigen Querschnitt zu erhalten, ist es zum Beispiel möglich, Rohre zur Bildung der Litzen herzustellen und diese abzuplatten, beispielsweise durch Walzen. Eine weitere Möglichkeit, eine Litze mit einem nicht kreisförmigen Rohr auszubilden, ist eine nierenförmiger Querschnitt. Durch den nierenförmigen Querschnitt, der zum Beispiel beim quetschenden Verseilen von Rundrohren über einen runden Formdorn entsteht, wird ein besonders großer Zwickelkanal zwischen den Litzen geschaffen. Da die Litzen in einer Salzschmelze aufgenommen sind, ist es vorteilhaft, die mechanisch verformten Teile spannungsfrei zu glühen, um die Gefahr korrosiver Angriffe zu minimieren.

Bei einer rohrförmigen Gestaltung der Litzen ist es alternativ oder zusätzlich zur elektrischen Beheizung auch möglich, zur Beheizung einen flüssigen oder gasförmigen Wärmeträger einzusetzen, der durch die rohrförmigen Leitungen strömt.

Wenn die Rohrleitung als Rohrleitung in einem Solarfeld eines Parabolrinnen-Solarkraftwerks genutzt wird, umfasst die Rohrleitung üblicherweise ein innenliegendes Rohr, das von der Salzschmelze durchströmt wird und eine außenliegende Hülle aus Glas. Der Zwischenraum zwischen dem innenliegenden Rohr und der außenliegenden Hülle aus Glas ist evakuiert. Die Oberfläche des innenliegenden Rohres ist üblicherweise so gestaltet, dass diese die Sonnenstrahlung absorbiert und auf diese Weise aufwärmt. Die Wärme wird dann von dem innenliegenden Rohr an den Wärmeträger, der die Rohre durchströmt, übertragen. Diese Bereiche werden im Allgemeinen auch Receiver genannt.

In einem Solarkraftwerk verlaufen die Rohrleitungen üblicherweise u-förmig, wobei ein Schenkel der Rohrleitung mit einem Zulauf und ein zweiter Schenkel mit einem Ablauf verbunden sind. Die Schenkel der Rohrleitung erstrecken sich ohne Krümmung über eine Strecke von üblicherweise mindestens 100 m, bevorzugt über mindestens 300 m. An der dem Zulauf und dem Ablauf gegenüberliegenden Seite sind die beiden Schenkel miteinander über ein querlaufendes Rohrstück verbunden. Die Salzschmelze strömt dann über einen Bogen in das Querstück und vom Bogen in die parallel liegende, den zweiten Schenkel bildende zweite Rohrleitung. In einer bevorzugten Ausführungsform weisen die Rohrbögen zur Strömungsumlenkung jeweils einen Rohrleitungsabschnitt auf, der sich in Richtung der Rohrleitung fortsetzt, wobei der Rohrleitungsabschnitt mit einem Verschluss verschlossen ist und der Heizleiter durch den Verschluss des Rohrleitungsabschnitts geführt ist. Damit bei Betrieb des isolierten Heizleiters keine Spannung an die Rohrleitung übertragen wird, wird der Heizleiter üblicherweise mit einer Isolierung durch den Verschluss der Rohrleitung geführt. Die Isolierung dient gleichzeitig zur Abdichtung.

Der Verschluss des Rohrleitungsabschnittes kann zum Beispiel als Blindflansch ausgeführt sein. Auch jeder beliebige andere Deckel, der dem in den Rohrleitungen auftretenden Druck standhält, kann verwendet werden. Bevorzugt ist jedoch ein Blindflansch.

Unabhängig von Art und Form des Heizleiters ist vorzugsweise am Ende des Heizleiters ein Rundstab angebracht. Dieser kann zum Beispiel durch eine Schweißverbindung, eine Schraubverbindung oder eine Klemmverbindung mit dem Heizleiter und isolierend oder nicht isolierend mit der Rohrleitung verbunden sein. Die Verbindung muss dabei so gestaltet sein, dass der Rundstab gut elektrisch leitend mit dem Heizleiter verbunden ist. Wenn der Verschluss des Rohrleitungsabschnittes ein Blindflansch ist, wird der Rundstab zur Befestigung zum Beispiel elektrisch isolierend oder nicht isolierend in einer Stopfbuchskonstruktion geführt und befestigt. Um im Fall des isolierten Heizleiters zu verhindern, dass elektrischer Strom an die Rohre geleitet wird, wird die Stopfbuchspackung der Stopfbuchskonstruktion elektrisch isolierend ausgeführt. Durch die Stopfbuchspackung wird ein Spalt zwischen dem Rundstab und der Durchführung des Heizleiters in die Rohrleitung erzielt. Über den Spalt kann eine niedrige Spannung bis zu 0,7 V anliegen. Trotz der geringen Spannung herrscht im Spalt und in der Nähe des Spaltes eine hohe elektrische Feldstärke. Diese hohe elektrische Feldstärke bewirkt einen Stromfluss zu und über die Rohrleitungswandung, wenn das Rohrleitungssystem mit elektrisch leitender Salzschmelze gefüllt ist. Die vollständig elektrische Isolation des Innenleiters im Inneren der Rohrleitung nahe seiner Einführung, zum Beispiel über den Blindflansch, unterbindet einen unerwünschten Stromfluss. Die elektrische Isolierung kann zum Beispiel im Bereich einer Stopfbuchse oder im Bereich einer Flachdichtung aufgebaut werden. Wenn eine Flachdichtung eingesetzt wird, sind zudem elektrisch isolierte Verschraubungen zu verwenden.

Da zur elektrischen Isolierung eingesetzte Materialien im Allgemeinen nicht gegen die Temperaturen beständig sind, die im Inneren der Rohrleitungen aufgrund der geschmolzenen Salzschmelze herrschen, ist es möglich, durch geeignete thermische Isoliermaterialien einen Temperaturgradienten zu erzeugen. So ist es zu Beispiel möglich im Bereich des Blindflansches in der Rohrleitung ein Fasermaterial zur thermischen Isolierung aufzunehmen. Als Fasermaterial kann zum Beispiel ein Quarzfasergewebe eingesetzt werden. Der Rundstab, an dem der Heizleiter befestigt ist, wird durch eine elektrisch isolierende und hochtemperaturbeständige Hülse, zum Beispiel aus Keramik oder Siliciumcarbid geführt. An die erste Hülse aus Keramik oder Siliciumcarbid schließt sich eine zweite elektrisch isolierende Hülse, die nicht mehr so hoch temperaturbeständig sein muss, an. Als Material für die zweite Hülse eignet sich zum Beispiel Polytetrafluorethylen (PTFE) oder ein anderer Hochtemperaturkunststoff. Die beiden elektrisch isolierenden Hülsen sind von einer weiteren Hülse umschlossen, die in einem Flansch endet. Der Flansch ist mit einer elektrischen Isolierung mit einem zweiten Flansch verschlossen. Zur Durchführung des Rundstabs durch den verschließenden Flansch wird eine Stopfbuchse eingesetzt, die mit einer Dichtung abgedichtet ist. Durch die eingesetzten Isoliermaterialien ist die Temperatur im Bereich der Stopfbuchse so gering, dass die Dichtung aus einem Standardmaterial gefertigt werden kann.

Wenn das erstarrte Salz in der Rohrleitung aufgeschmolzen werden soll, darf der Heizleiter im Bereich der Einführung nur eine geringe Wärmemenge erzeugen, um die Ausbildung eines Temperaturgradienten nicht zu gefährden. Dies kann zum Beispiel dadurch erzielt werden, dass der Heizleiter im Bereich seiner Einführung in die Rohrleitung einen niedrigeren elektrischen Widerstand aufweist als in der eigentlichen Heizzone. Der niedrigere elektrische Widerstand kann beispielsweise dadurch erzielt werden, dass der Rundstab, in den der Heizleiter mündet, mit einem größeren Durchmesser ausgeführt ist, als der Heizleiter in der Heizzone. Alternativ und zusätzlich kann der Heizleiter im Bereich der Einführung in die Rohrleitung ein besonders gut elektrisch leitfähiges Material enthalten, um eine Aufheizung des Heizleiters im Bereich der Einführung in die Rohrleitung zu vermeiden. Ein geeignetes elektrisch gut leitfähiges Material ist zum Beispiel Kupfer oder Aluminium. Hierbei kann der Heizleiter im Bereich der Einführung vollständig oder teilweise aus dem elektrisch gut leitfähigen Material gefertigt sein. So ist zum Beispiel möglich, den Heizleiter im Bereich der Einführung so zu konstruieren, dass dieser einen massiven Kupferkern enthält.

Alternativ zu einem Rundstab kann auch ein Stab mit beliebigem anderem Querschnitt eingesetzt werden. Bevorzugt ist jedoch ein Rundstab.

Der Innenleiter kann auch nicht isoliert in das Rohrleitungssystem eingebaut werden In diesem Fall wird die Einführung ohne jede Isolationsmaßnahme gestaltet. Dies ist insbesondere dann von Vorteil, wenn zum Beispiel einzelne Rohrleitungsabschnitte einer Solarschleife nicht durch Flanschverbindungen miteinander verbunden werden, sondern mit einander verschweißt sind. Dann ist es nicht mehr möglich, den elektrischen Widerstand der gesamten Rohrleitung durch Isolation der einzelnen Rohrleitungsabschnitte zu kontrollieren. Wenn der Heizleiter nicht gegen die miteinander verschweißten Rohrleitungsabschnitte elektrisch isoliert wird, fließen bei Anlegen einer Spannung durch die einzelnen Rohrleitungsabschnitte und den Innenleiter Ströme, deren Verhältnis proportional zum Verhältnis der Leitfähigkeit der Rohrleitung zur Leitfähigkeit des Heizleiters ist. Entsprechend dem Verhältnis wird Wärme an der Rohrleitung beziehungsweise am Heizleiter erzeugt. Durch Wahl eines ausreichenden Querschnitts des Heizleiters und Wahl eines sehr gut elektrisch leitenden Materials für den Heizleiter, zum Beispiel Kupfer oder Aluminium, kann der Widerstand des Heizleiters so weit gesenkt und die Leitfähigkeit so weit erhöht werden, dass der Strom ausreichend stark in den Innenleiter hineingeführt wird und die Wärmeentwicklung auf den im Inneren der Rohrleitung geführten Heizleiter in einem Maße konzentriert wird, dass der Innenheizleiter schneller aufgeheizt wird als die Rohrleitung. Förderlich für eine schnellere Aufheizung des Innenleiters ist, dass die Rohrleitung eine im Allgemeinen deutlich höhere Masse und damit eine deutlich höhere Wärmekapazität aufweist als der Innenleiter.

Bei einer solchen Anordnung mit unisoliertem Heizleiter entstehen über die gesamte Rohrleitung keine Potentialdifferenzen zwischen Heizleiter und Rohrleitung. Die Rohrleitung ist gegenüber dem Apparategerüst, das die Rohrleitung trägt, elektrisch zu isolieren.

Damit der Heizleiter von der die Rohrleitung durchströmenden Salzschmelze nicht beschädigt wird, ist dieser vorzugsweise aus einem gegenüber dem eingesetzten Salz, insbesondere gegenüber Nitrat, korrosionsfesten Material gefertigt. Alternativ ist es möglich, wie vorstehend bereits beschrieben, den Heizleiter mit einer korrosionsfesten Hülle zu versehen. Wenn der Heizleiter aus einem korrosionsfesten Material gefertigt wird, so eignen sich insbesondere Edelstahl, beispielsweise bevorzugt die Stähle vom Typ St 1.4571 und St 1.4541, aber auch St 1.4301 oder Nickel-basierte Stähle wie St 2. 4856.

Wenn ein Edelstahl, beispielsweise St 1.4571 eingesetzt wird, bildet sich zunächst auf dem Heizleiter eine passivierende, ca. 15 µm dicke korrosionshemmende Metalloxid/- Nitridschicht aus, die dem Stromfluss einen merkbaren Widerstand entgegensetzt. Der Widerstand der Schutzschicht hilft bei der Potentialkontrolle des Heizleitersystems. Auch kleine elektrische Spannungen können an leitfähigen Salzen Elektrodenprozesse auslösen, die zur korrosiven Abtragungen führen. Die Elektrodenprozesse können ab einer bestimmten Grenzspannung einsetzen. Die korrosionshemmende Schutzschicht verursacht einen Schutz durch Überspannung und erhöht so die Zersetzungsspannung des Systems.

Der Einsatz des Heizleiters im Inneren der Rohrleitung erlaubt die Beherrschung hoher Schmelzpunkte des in der Rohrleitung eingesetzten Wärmeträgers. Dies eröffnet die Möglichkeit, auch Salzmischungen als Wärmeträger einzusetzen, die einen höheren Schmelzpunkt aufweisen als bislang diskutierte Salzmischungen. So können beispielsweise Nitratmischungen eingesetzt werden, die als Hauptkomponente Natriumnitrat enthalten. Dies hat den Vorteil, dass Kaliumvorkommen, die zur Produktion von Kalidünger eingesetzt werden können, weitgehend geschont werden. Derzeit enthält sogenanntes "Solarsalz 60" 60 Gew.% Natriumnitrat und 40 Gew.% Kaliumnitrat. Der Anteil an Natriumnitrat im Salz lässt sich auf 80 Gew.-% oder sogar auf über 90 Gew.-% und mehr steigern. Der Schmelzpunkt des Salzes steigt dementsprechend von 235°C bei einer Mischung von 40 Gew.-% Kaliumnitrat und 60 Gew.% Natriumnitrat auf 273°C bei einer Mischung von 80 Gew.-% Natriumnitrat und 20 Gew.% Kaliumnitrat und auf 293°C bei einer Mischung von 90 Gew.-% Natriumnitrat und 10 Gew.-% Kaliumnitrat. Bei Verwendung von reinem Natriumnitrat liegt der Schmelzpunkt bei 306°C.

Außerhalb der stöchiometrischen Zusammensetzung der Salzschmelzen zeigt der Innenleiter in Verbindung mit diesen Salzschmelzen große Vorteile. Die erstarrten hochschmelzenden Kristalle sind spezifisch schwerer als die umgebende Salzschmelze und sinken zum Boden der Rohrleitung. Die Absinkgeschwindigkeit ist für große Kristallite größer als für kleine Kristallite. Eine Anhaftung der Kristallite an der Rohrwandung und deren Belegung ist denkbar, wurde jedoch in gut isolierten Rohren bislang nicht beobachtet.. Bei einer Neigung der Rohre separiert sich hochschmelzendes Kristallisat an den tief gelegenen Stellen. Das Ausmaß dieser Separation hängt dabei von der Qualität der Isolierung der Rohrleitung ab. Sehr gut isolierte Rohrleitungen, in denen die Schmelze über einen langen Zeitraum langsam erstarrt, können eine stärkere Separation als weniger gut isolierte Rohrleitungen zeigen.

Den absinkenden, hochschmelzenden Kristallen gelingt es jedoch nicht, niedrigschmelzende Schmelze komplett zu verdrängen. In den tieferliegenden Bereichen der Rohrleitungen bildet sich vielmehr ein Gehäuf an hochschmelzenden Kristalliten, in dessen Zwickeln sich allerdings noch niedrigschmelzendes Material befindet. Beim vollständigen Erstarren bildet sich daraus ein inhomogenes Gemenge aus Kristalliten mit unterschiedlichen Schmelztemperaturen.

Beim Erhitzen dieses Gemenges schmelzen zunächst die Kristallite mit niedrigerem Schmelzpunkt. Die entstehende Schmelze benetzt zunächst vollständig den Verbund der Kristallite mit höherer Schmelztemperatur. Das entstehende zweiphasige Gemenge verliert dabei zunächst kaum seine mechanische Stabilität. Erst wenn auch ein Teil des stützenden Kristallitverbundes mit hoher Schmelztemperatur schmilzt, geht das Gemenge in eine pumpbare Form über. Für die Anwendung in Solarkraftwerken bedeutet dies, dass Rohrleitungen mit darin erstarrter Salzschmelze über den gedachten Schmelzpunkt - bei Solarsalz 60 von 242°C - hinaus erhitzt werden müssen, bevor eine schadensfreie Pumpbarkeit erreicht werden kann.

Durch selektives Kristallisieren von stark Natriumnitrat-haltigen Kristalliten und deren Absinken in tiefer liegende Bereiche der Rohrleitung wird die überstehende Restschmelze an Natriumnitrat abgereichert. Diese Abreicherung geht solange weiter, bis in der Schmelze das eutektische Konzentrationsverhältnis erreicht ist. In diesem Konzentrationsverhältnis erstarrt dann im oberen Bereich des Rohrleitungssystems die Restschmelze.

Durch den Einsatz des Heizleiters innerhalb der Rohrleitung gelingt es ökonomisch und sicher, solche Erstarrungsmorphologien aufzuschmelzen.

Insbesondere bei waagerechter Rohrleitungsführung kann der Heizleiter gezielt im oberen Bereich der Rohrleitung platziert werden. Dort ist er von einem Kristallitgemenge umgeben, das einen erhöhten Anteil von Kristalliten mit einer niedrigen Schmelztemperatur, nämlich der des Eutektikums, aufweist. Darüber hinaus können im oberen Bereich der Rohrleitung eine Vielzahl von Hohlräumen gefunden werden. Dort kann auf relativ einfache Weise ein Schmelzekanal geschaffen werden, der gegebenenfalls beim Aufheizen auftretende horizontale Druckdifferenzen abbaut.

Aufgrund der Erstarrungsmorphologie zum Beispiel von Solarsalz 60 wie vorstehend beschrieben, sind kaum sinnvolle Schmelzpunkte für eine Salzschmelze aus einem Salzgemisch zu definieren. So beginnt das Aufschmelzen bereits bei einer Temperatur von 221°C, jedoch verschwinden die letzten Kristallite erst bei einer Temperatur oberhalb von 280°C.

Da eine Rohrleitung üblicherweise neben den eigentlichen Rohrleitungsabschnitten auch Armaturen, beispielsweise Ventile enthält, ist es notwendig, auch die Ventile entsprechend zu beheizen, um deren Funktion sicherzustellen und zum Anderen um diese durch Ausdehnung der Salzschmelze beim Aufschmelzen nicht zu zerstören. Um ein Ventil zu beheizen ist es zum Beispiel möglich, den Bereich des statischen Schließelementes direkt aus dem Innenheizleiter heraus zu beheizen und hierdurch das Salz im Ventil zu schmelzen. Dabei wird der Heizleiter von beiden Seiten des Ventils direkt an dem statischen Schließelement angeschlossen. Ist dort eine Widerstandsanpassung erforderlich, kann ein ringförmiger guter elektrischer Leiter um das statische Schließelement herum gelegt werden. Der Ring wird dabei vorzugsweise so in den Ventilkörper eingebaut, dass er tragende Teile der Ventilkonstruktion nicht schwächt. Durch eine elektrische Isolation gegen den Ventilkörper wird freiwerdende Wärme des Heizleiters auf den Sitz des Ventils konzentriert. Alternativ ist es auch möglich, den Ring aus einem sehr gut elektrisch leitenden Material, beispielsweise Kupfer, zu fertigen. Der Heizring im Ventil wird vorzugsweise in seinem Widerstandswert dem Wert des Heizleiters angepasst. Hierbei bildet der Ring einen Teil des Heizleiters im Bereich des Ventils. Neben dem Einsatz in einem Ventil ist eine analoge Konstruktion bei anderen Armaturen einsetzbar, zum Beispiel bei Klappen oder Schiebern. Der Ring weist dabei jeweils die geometrische Form der Durchführung auf, durch die die Salzschmelze strömt.

Ausführungsbeispiele der Erfindung sind in den Figuren dargestellt und werden in der nachfolgenden Beschreibung näher erläutert.

Es zeigen:
- Figur 1: eine schematische Darstellung eines Solarfeldes eines Parabolrinnen-Solarkraftwerkes
- Figur 2: einen Rohrabschnitt mit eingefrorener Salzschmelze
- Figur 3: einen Schnitt durch eine Rohrleitung mit darin erstarrtem Solarsalz 60,
- Figur 4: einen beispielhaften Verlauf eines Heizleiters in einer Solarschleife,
- Figur 5: einen Rohrleitungsabschnitt mit darin verlaufendem Heizleiter,
- Figur 6: Wirkung einer Durchströmung des Rohres auf einen unbefestigten Heizleiter,
- Figur 7: eine Befestigung eines Heizleiters mit Isolator in einer Öse,
- Figur 8: Befestigung eines Heizleiters mit Schlinge an einem Haken,
- Figur 9: Bildung eines Kanals im erstarrten Salz entlang dem Heizleiter
- Figur 10: Befestigung eines Heizleiters im Bereich eines Rohrbogens zur Strömungsumlenkung,
- Figur 11: Führung des Innenleiters an einem Endstück mit 180°-Bogen,
- Figur 12: eine alternative Form einer im 90°-abgewinkelten Rohrleitungsführung
- Figur 13: einen Querschnitt durch einen Rohrleitungsabschnitt mit mehreren Segmenten,
- Figur 14: Verlauf von parasitären Strömen zwischen Heizleiter und Rohrwandung,
- Figuren 15A bis 15E: Querschnitte unterschiedlicher Heizleitergeometrien,
- Figur 16: einen steifen Heizleiter mit einem Dehnungsausgleich,
- Figur 17: einen Querschnitt durch eine Rohrleitung mit einem mit federnden Abstandshaltern gehaltenen Heizleiter,
- Figur 18: einen Schnitt durch die Rohrleitung entlang der Linie A-A' in Figur 17,
- Figur 19: einen Schnitt durch die Rohrleitung entlang der Linie B-B' in Figur 17,
- Figur 20: einen als Seil ausgebildeten und völlig unisolierten Heizleiter in einer langen Rohrleitung aus verschweißten Rohrleitungsstücken
- Figur 21: einen als Seil ausgebildeten Heizleiter mit Durchführung durch einen Blindflansch,
- Figur 22A bis 22C: Querschnitte unterschiedlicher als Seil ausgebildeter Heizleiter,
- Figur 23: alternative Durchführung eines Heizleiters durch einen Blindflansch,
- Figur 24: Führung eines Heizleiters in einer beweglichen Rohrverbindung,
- Figur 25: einen Querschnitt durch ein Ventil mit darin geführtem Heizleiter,
- Figur 26: einen Schnitt durch das Ventil aus Figur 25 in Draufsicht.

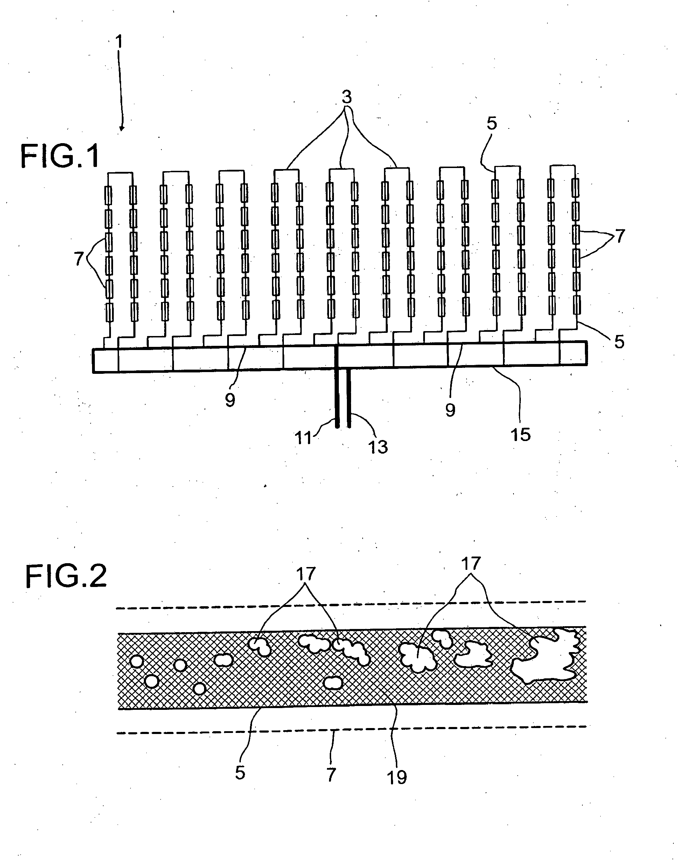

Figur 1 zeigt eine schematische Darstellung eines Solarfeldes eines Parabolrinnen-Solarkraftwerks.

Ein Solarfeld 1 eines Parabolrinnen-Solarkraftwerkes weist mehrere Solarschleifen 3 auf. Die Solarschleifen 3 werden jeweils von einer Rohrleitung 5 gebildet, die von einem Wärmeträger durchströmt wird. Als Wärmeträger wird erfindungsgemäß eine Salzschmelze, vorzugsweise Solarsalz, d.h. eine Mischung aus Kaliumnitrat und Natriumnitrat im Verhältnis von 40 : 60, oder als Eutektikum mit einem Mischungsverhältnis von 44 : 56 eingesetzt.

In den Solarschleifen 3 wird der Wärmeträger mittels einstrahlender Solarenergie erwärmt. Hierzu sind die Rohrleitungen 5 segmentweise von einem Glasrohr 7 umschlossen. Der Raum zwischen der Rohrleitung 5 und dem Glasrohr 7 wird evakuiert. Unterhalb der Glasrohre 7 befindet sich weiterhin eine Parabolrinne, in der einstrahlendes Sonnenlicht reflektiert und auf das Glasrohr 7 gelenkt wird. Durch die einfallende Strahlung auf das Glasrohr 7 wird Wärme an den Wärmeträger, der die Rohrleitung 5 durchströmt, geleitet, wodurch der Wärmeträger aufgeheizt wird.

Der die Rohrleitungen 5 der Solarschleifen 3 durchströmende Wärmeträger strömt in einen Sammler 9 und vom Sammler 9 weiter in eine Wärmeträgerablauf 11. Der durch die Wärmeträgerablauf 11 strömende Wärmeträger wird üblicherweise in einen Wärmetauscher geleitet, in dem dieser Wärme an einen Dampfkreislauf abgibt, mit dem zum Beispiel Turbinen zur Stromerzeugung betrieben werden. Der den Wärmetauscher verlassende abgekühlte Wärmeträger wird über einen Wärmeträgerzulauf 13 in einen Verteiler 15 geleitet und vom Verteiler 15 in die Rohrleitungen 5 der Solarschleifen 3.

Aufgrund des hohen Schmelzpunktes einer Salzschmelze erstarrt diese im Allgemeinen, wenn das Solarkraftwerk nicht betrieben wird. Dies ist zum Beispiel immer dann der Fall, wenn zu wenig Sonnenlicht die Parabolrinnen bestrahlt, zum Beispiel nachts. Auch muss der Betrieb eingestellt werden, wenn zum Beispiel Wartungsarbeiten anliegen.

Bei Stillstandszeiten kann die die Rohrleitungen 5 durchströmende Salzschmelze erstarren. Dies ist beispielhaft für einen Rohrleitungsabschnitt in Figur 2 dargestellt.

Beim Erstarren der Salzschmelze in der Rohrleitung 5 kommt es im Allgemeinen zu einer Volumenkontraktion. Dies führt dazu, dass in der Rohrleitung 5 evakuierte Blasen 17 entstehen. Die evakuierten Blasen 17 befinden sich dabei innerhalb des erstarrten Salzes 19.

Wird versucht, das erstarrte Salz aufzuschmelzen, ist es möglich, dass gegebenenfalls durch große räumliche Entfernung zwischen den Aufschmelzstellen, an denen eine Volumenausdehnung auftritt, und den evakuierten Blasen 17 kein ausreichender Volumenausgleich erfolgt, um auftretende Drücke abzubauen. Die durch das Schmelzen des Salzes entstehende Volumenausdehnung kann dann zu einer Beschädigung der Rohrleitung 5 führen.

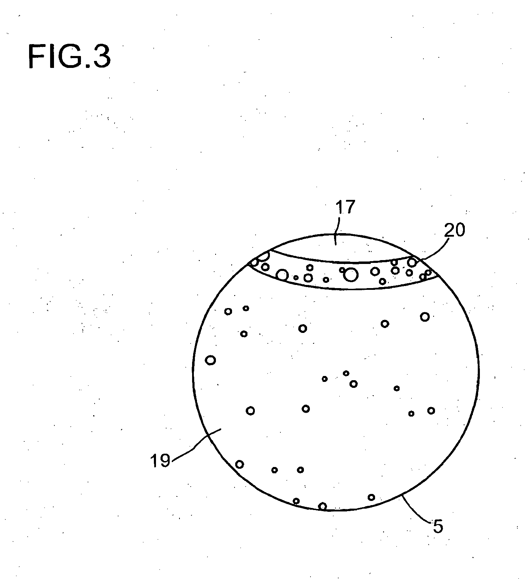

Die Morphologie von erstarrtem Solarsalz 60, das heißt einer Salzmischung aus 60 Gew.-% Natriumnitrat und 40 Gew.% Kaliumnitrat ist beispielhaft in Figur 3 dargestellt.

Beim Erstarren von Solarsalz 60 erstarrt bei ca. 244°C zunächst mit Natriumnitrat angereichertes Kristallisat mit einer Schmelztemperatur von ca. 280°C. Das Natriumnitrat bildet Kristallite aus, die innerhalb des Rohrleitungsabschnittes 47 nach unten sinken. Hierbei ist die Sinkgeschwindigkeit unter anderem davon abhängig, wie groß die Kristallite werden. Die Größe der Kristallite hängt von der Erstarrungsgeschwindigkeit ab. Aufgrund des Absinkens der Kristallite aus Natriumnitrat nimmt die Konzentration an Kristalliten nach oben innerhalb des Rohrleitungsabschnittes 53 ab. Innerhalb des erstarrten Salzes 19 bilden sich aufgrund der Volumenkontraktion des Salzes vereinzelte Hohlräume aus. An der Oberfläche des erstarrten Salzes 19 bildet sich ein schaumartiger Bereich 20 aus, in dem die eutektische Zusammensetzung des Solarsalzes 60 erstarrt ist. Dieser Bereich enthält im Allgemeinen keine Kristallite an Natriumnitrat. Oberhalb des schaumartigen Bereiches 20 bildet sich eine evakuierte Blase 17. Das Kristallisat sammelt sich in den unteren Bereichen des durch Strömung zugänglichen Bereiches der Rohrleitung. Hohlräume bilden sich bevorzugt in oberen Bereichen des durch Strömung zugänglichen Bereiches.

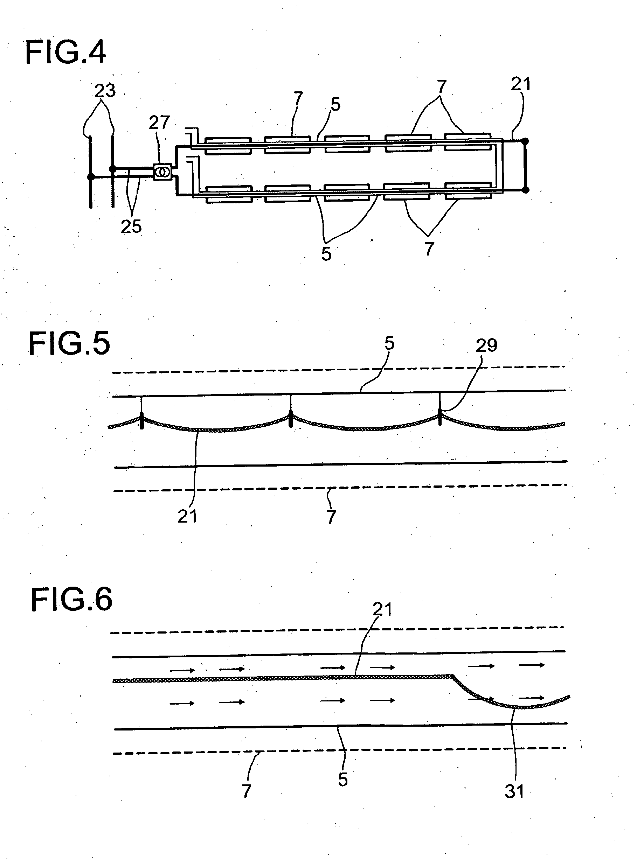

Um ein gleichmäßiges Aufschmelzen der Salzschmelze innerhalb einer Rohrleitung 5 zu erhalten, wird erfindungsgemäß ein Heizleiter 21 mit einheitlichem spezifischen Widerstand durch die Rohrleitung 5 gelegt. Dies ist beispielhaft in Figur 4 dargestellt.

Erfindungsgemäß wird im Inneren der Rohrleitung 5 der Heizleiter 21 geführt. Der Heizleiter ist dabei zum Beispiel als elektrischer Widerstandsdraht ausgebildet. Bei Anlegen einer Spannung heizt sich der Heizleiter 21 auf und das den Heizleiter 21 umgebende Salz schmilzt unter Bildung eines den Heizleiter 21 umgebenden Kanals.

Die Versorgung des Heizleiters 21 erfolgt über eine Hauptspannungsversorgung 23. Von der Hauptspannungsversorgung 23 zweigt eine Versorgungsleitung 25 für den Heizleiter 21 ab. In einem Transformator 27 wird die Versorgungsspannung auf die für die Beheizung der Salzschmelze in der Rohrleitung 5 notwendige Spannung transformiert. Es ist möglich, mehrere Heizschleifen an eine Spannungsversorgung anzuschließen. Die Spannungsversorgung wird nacheinander auf die Schleifen geschaltet und die Schleifen nacheinander aufgeheizt.

Um eine einfache Montage des Heizleiters 21 zu möglichen, wird dieser vorzugsweise am Ende eines Schenkels der u-förmig verlaufenden Rohrleitung 5 aus der Rohrleitung 5 herausgeführt und mit dem Heizleiter, der aus dem zweiten Schenkel herausgeführt wird, elektrisch leitend verbunden. Hierdurch kann eine aufwändige Verlegung insbesondere bei beweglichen Kollektorrohrleitungen 5, die viele Abstützungen für den Heizleiter 21 benötigt, vermieden werden.

Besonders bevorzugt ist es, zur Beheizung einen elektrischen Heizkreis mit schwebendem Wechselpotential zu nutzen, das durch einen ungeerdeten Transformator 27 erzeugt wird. Ein schwebendes Wechselpotential bietet Sicherheitsvorteile. So ist ein Isolationsfehler in einer Schleife tolerierbar.

Die Receiver selbst sind elektrisch isoliert zu haltern. Die Receiver sind auch gegeneinander zu isolieren. Im Allgemeinen ist ein Widerstand des Isolators ausreichend, der um Faktor 10 größer ist als der Widerstand des Heizleiters. So ist zum Beispiel aufgrund des bevorzugten kleinen Widerstands des Heizleiters von weniger als 0,1 Ohm über einen Receiver für eine ausreichende Isolierung in der Regel bereits ein Widerstand von einem Ohm ausreichend. Der Isolationszustand des Heizleiters kann zum Beispiel durch eine Online-Widerstandsmessung überwacht werden.

In Figur 5 ist ein Rohrleitungsabschnitt mit darin verlaufendem Heizleiter dargestellt.

Der Heizleiter 21 wird in der Rohrleitung 5 zum Beispiel hängend, wie in Figur 5 dargestellt, befestigt. Hierzu ist es zum Beispiel möglich, den Heizleiter 21 durch Ösen 29 zu führen. Die Ösen 29 sind dabei zum Beispiel hängend an der Oberseite der Rohrleitung 5 befestigt.

Der Heizleiter 21 wird vorzugsweise azentrisch in der Rohrleitung 5 geführt, wobei der Abstand zur Oberseite der Rohrleitung 5 kleiner gewählt wird als der Abstand zur Unterseite der Rohrleitung 5. Durch das azentrische Verlegen des Heizleiters 21 wird vermieden, dass der Heizleiter 21 beim Aufheizen und einer damit verbundenen Längenausdehnung mit der Rohrwand in Kontakt kommt. Das Durchhängen des Heizleiters 21 ist dabei stark von der Temperatur abhängig. Je höher die Temperatur ist, umso stärker ist die Längenausdehnung und umso stärker hängt der Heizleiter 21 durch.

Neben der in Figur 5 dargestellten Befestigung mit Ösen 29 ist es alternativ auch möglich, zum Beispiel federnde Abstandhalter zu verwenden. Die federnden Abstandhalter werden dabei vorzugsweise kreuzförmig in der Rohrleitung 5 angeordnet und der Heizleiter 21 im Schnittpunkt des Kreuzes geführt.

Ein weiterer Vorteil der azentrischen Anordnung des Heizleiters 21 im oberen Bereich der Rohrleitung 5 ist auch, dass die evakuierten Blasen 17 üblicherweise im oberen Teil der Rohrleitung 5 auftreten. Beim Aufheizen des Heizleiters 21 und dem damit verbundenen Schmelzen des Salzes in der Rohrleitung 5 wird schnell ein Flüssigkeitskanal entlang dem Heizleiter 21 gebildet. Durch diesen gebildeten Kanal können Drücke, die durch Volumenexpansion beim Aufschmelzen auftreten können, zu den entlastend wirkenden evakuierten Blasen 17 abgeführt werden.

Wenn der Heizleiter 21 in den Ösen 29 nicht befestigt wird, kann dies jedoch dazu führen, dass der Heizleiter 21 mit der durch die Rohrleitung 5 strömenden Salzschmelze mitgerissen wird, bis dieser gespannt in der Rohrleitung 5 verläuft. Dies ist beispielhaft in Figur 6 dargestellt. Lediglich am Ende, das heißt unmittelbar vor einer Fixierung des Heizleiters 21 bildet sich eine große Schlaufe 31 aus, die gegebenenfalls auch die Rohrleitung 5 berühren kann.

Ein weiterer Nachteil des Spannens des Heizleiters 21 unter Bildung der Schlaufe 31 ist, dass eine solche Leiterverschiebung im Falle des Erstarrens der Salzschmelze zu einer sehr starken mechanischen Belastung des Heizleiters 21 mit folgenden mechanischen Schäden führen kann. Der Heizleiter wird beim Erstarren des Salzes in seiner Position fixiert und beginnt aufgrund der abnehmenden Temperatur der Salzschmelze zu schrumpfen. Hierdurch wirken starke Zugkräfte auf den bereits gespannten Teil des Heizleiters 21.

Um eine solche Verschiebung des Heizleiters 21 zu vermeiden, wird dieser vorzugsweise axial in der Rohrleitung 5 fixiert.

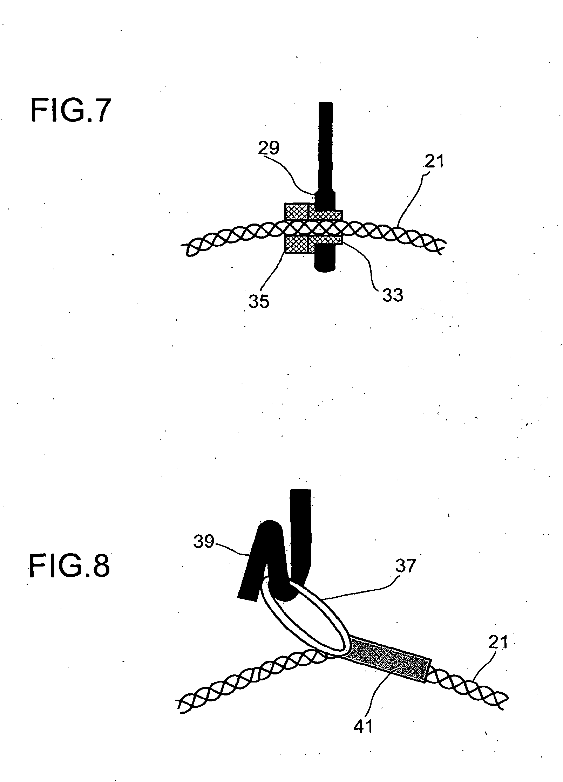

Eine mögliche Fixierung des Heizleiters 21 ist beispielhaft in den Figuren 7 und 8 dargestellt.

In Figur 7 ist eine Befestigung eines Heizleiters in einer Öse mit einem Isolator dargestellt.

Zur Befestigung des Heizleiters 21 ist es zum Beispiel möglich, den Heizleiter 21 mit einer isolierenden Hülse 33 zu versehen. Die isolierende Hülse 33 wird dabei so mit dem Heizleiter 21 verbunden, dass die isolierende Hülse nicht verschiebbar ist. Hierzu ist es zum Beispiel möglich, die isolierende Hülse 33 auf den Heizleiter 21 aufzuklemmen. Alternativ ist es auch möglich, die isolierende Hülse 33 zum Beispiel lösbar mit dem Heizleiter 21, zum Beispiel durch Verschrauben, oder nicht lösbar, zum Beispiel durch Verschweißen, zu verbinden.

Die isolierende Hülse 33 weist einseitig eine Erweiterung 35 auf. Zur Befestigung des Heizleiters 21 in der Rohrleitung 5 wird der Heizleiter 21 mit der darauf aufgebrachten isolierenden Hülse 33 durch eine in der Rohrleitung 5 befestigte Öse 29 geführt. Mit der Erweiterung 35 liegt die isolierende Hülse 33 dann an der Öse 29 an, so dass die isolierende Hülse 33 nicht durch die Öse 29 durchrutschen kann. Um ein Durchrutschen im laufenden Betrieb zu vermeiden, ist die Erweiterung 35 auf der vom Wärmeträger angeströmten Seite der Öse 29 positioniert.

Wenn eine Strömungsumkehr oder ein Betrieb der Solarschleife 3 vorgesehen sein soll, in der der Wärmeträger in beliebiger Richtung strömen kann, ist es alternativ auch möglich, eine weitere Erweiterung auf der der Erweiterung 35 gegenüberliegenden Seite anzubringen, nachdem der Heizleiter 21 durch die Öse 29 geführt worden ist.

Eine alternative Befestigung des Heizleiters 21 ist in Figur 8 dargestellt.

Bei der in Figur 8 dargestellten Ausführungsform ist am Heizleiter 21 eine Schlinge 37 angebracht. Die Schlinge 37 wird in einen Haken 39, der beispielsweise, wie in Figur 8 dargestellt, spiralförmig gestaltet sein kann, eingehängt. Durch den spiralförmig gestalteten Haken 39 wird vermieden, dass sich die Schlinge 37 im laufenden Betrieb aufgrund unterschiedlicher Strömungseinflüsse lösen kann.

Die Schlinge 37 kann zum Beispiel mittels einer Hülse 41 auf den Heizleiter 21 befestigt werden. Die Hülse 41 ist dabei zum Beispiel eine Klemmhülse, die mit dem Heizleiter 21 verbunden wird. Das Befestigen der Hülse 41 kann zum Beispiel durch Verklemmen oder auch durch Verschweißen oder Verschrauben erfolgen.

Besonders bevorzugt ist es, wenn die Hülse 41 und/oder die Schlinge 37 aus einem isolierenden Material gefertigt sind.

Die Verwendung einer isolierenden Hülse 33, wie sie in Figur 7 dargestellt ist, oder einer Schlinge 37 und einer Hülse 41 aus einem isolierenden Material hat den Vorteil, dass kein Stromfluss vom Heizleiter 21 an die Hülse 29 bzw. den Haken 39 erfolgt. Auf diese Weise können parasitäre Ströme, die über die Befestigung vom Heizleiter 21 an die Rohrleitung 5 fließen, reduziert werden.

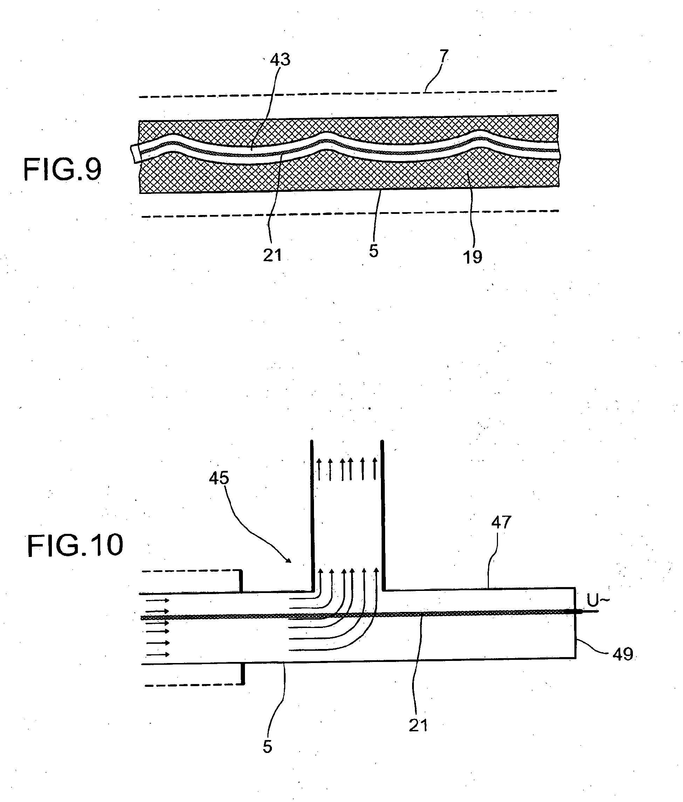

In Figur 9 ist eine Bildung eines Kanals im erstarrten Salz entlang des Heizleiters dargestellt.

Wenn nach einem ungewollten Stillstand des Solarkraftwerkes, zum Beispiel bei Stromausfall in der Nacht, das Salz in den Rohrleitungen 5 erstarrt ist, wird zur Wiederinbetriebnahme zunächst der Heizleiter 21 mit einer Spannung versorgt, wodurch sich dieser aufheizt. Um den aufgeheizten Heizleiter 21 beginnt das in den Rohrleitungen 5 enthaltene Salz zu schmelzen. Bei einem gleichmäßigen Stromfluss im Heizleiter 21 schmilzt das Salz gleichmäßig, und es bildet sich ein Kanal 43. Durch den Kanal 43 kann das geschmolzene Salz strömen, wodurch auftretende Drücke aufgrund der Volumenzunahme beim Schmelzen des Salzes abgebaut werden können.

Durch Vermeidung eines Druckaufbaus dadurch, dass das Salz durch den Kanal 43 strömen kann, werden Schäden an den Rohrleitungen 5 bei der Inbetriebnahme des Solarkraftwerkes vermieden.

Durch den Einsatz des Heizleiters 21 ist es weiterhin möglich, darauf zu verzichten, die Rohrleitungen 5 und damit das gesamte Solarfeld 1 bei gewolltem kurzem Stillstand zu entleeren. Auch ist es nicht notwendig, alternativ zum Entleeren der Rohrleitungen 5 das Salz vollständig am Erstarren zu hindern. Der Heizleiter muss lediglich einen ausreichend großen Strömungskanal freihalten.

Darüber hinaus bietet der Innenheizleiter beim Wiederanfahren nach einer Schleifenentleerung große Vorteile. Zum einen kann das Rohrleitungssystem schon beströmt werden, wenn nur der Heizleiter nicht aber das Rohrleitungssystem die Schmelztemperatur deutlich überschritten hat. Der einheitliche spezifische Widerstand über die gesamte Länge des Heizleiters sorgt andererseits sicher für ein Fehlen von Kaltstellen.

Eine Befestigung eines Heizleiters im Bereich eines Rohrbogens zur Strömungsumleitung ist beispielhaft in Figur 10 dargestellt.

Üblicherweise ist eine Solarschleife 3, wie aus Figur 1 ersichtlich, u-förmig gestaltet. Hierbei bilden zwei Rohrleitungen 5 die Schenkel der u-förmigen Solarschleife 3, wobei die Rohrleitungen 5, die die Schenkel bilden, auf der dem Sammler 9 bzw. Verteiler 15 abgewandten Seite miteinander über ein quer verlaufendes Rohr miteinander verbunden sind. Die Salzschmelze strömt durch den einen Schenkel der u-förmigen Solarschleife 3, anschließend über das die beiden Schenkel verbindende quergeführte Rohrleitungsstück und durch die zweite Rohrleitung 5 zurück zum Sammler 9. Um eine aufwändige Montage des Heizleiters 21 im Bereich der Strömungsumlenkung der Salzschmelze am Ende der Schenkel zu vermeiden, ist es vorteilhaft, einen zur Strömungsumlenkung eingesetzten Rohrbogen 45 als T-Stück zu gestalten und mit einem Rohrleitungsabschnitt 47 zu versehen, der sich in Richtung der Rohrleitung 5 fortsetzt. Der Rohrleitungsabschnitt 47 ist mit einem Verschluss 49 verschlossen, und der Heizleiter 21 wird durch den Verschluss 49 geführt.

Als Verschluss 49 für den Rohrleitungsabschnitt 47 eignet sich zum Beispiel ein Blindflansch.

Um einen Stromfluss an die Rohrleitung 5 über den Rohrleitungsabschnitt 47 zu vermeiden, wird der Heizleiter 21 durch den Verschluss 49 isoliert geführt. Der durch den Verschluss 49 geführte Heizleiter 21 kann dann an eine geeignete Potentialversorgung angeschlossen werden. Alternativ ist es auch möglich, wie in Figur 4 dargestellt, jeweils zwei Heizleiter zweier benachbarter Rohrleitungen 5 miteinander zu verbinden.

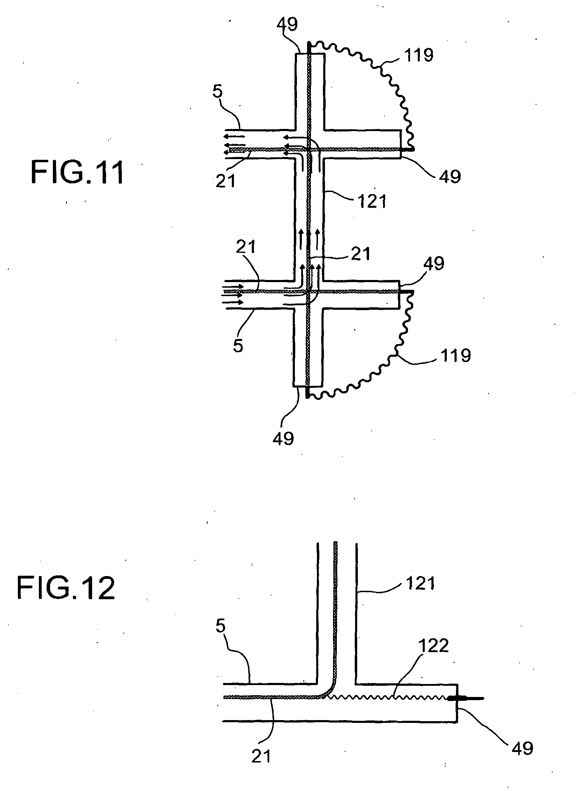

Eine Umlenkung der Salzschmelze über 180° durch zwei Rohrbögen, wie sie in Figur 10 dargestellt sind, ist in Figur 11 gezeigt.

Um eine Beheizung des Rohrinneren zu ermöglichen, wird zunächst ein Heizleiter 21 entlang der Rohrleitung 5 durch den Verschluss 49 isoliert geführt. Ein um 90° gedrehter Rohrleitungsabschnitt 121 ist mit der Rohrleitung 5 verbunden. Durch den um 90° gedrehten Rohrleitungsabschnitt 121 wird ebenfalls ein Heizleiter 21 geführt. Um den Heizleiter 21 sowohl in der Rohrleitung 5 als auch im um 90° gedrehten Rohrleitungsabschnitt mit Strom zu versorgen, sind die Enden der jeweiligen Heizleiter, die durch die Verschlüsse 49 isoliert geführt sind, durch eine externe Leitungsführung 119 miteinander elektrisch kontaktiert.

Auf die gleiche Weise schließt sich an den um 90° gedrehten Rohrleitungsabschnitt 121 eine zweite Rohrleitung 5 an, die zum um 90° gedrehten Rohrleitungsabschnitt 121 ebenfalls um 90° gedreht ist, so dass insgesamt eine Umlenkung um 180° erzielt wird. Auch an dieser Stelle wird der Heizleiter 21 jeweils durch den Verschluss 49 der Rohrleitungsenden geführt und durch eine externe Leitungsführung 119 miteinander elektrisch miteinander verbunden, so dass insgesamt alle von der Salzschmelze durchströmten Leitungsabschnitte mit einem innenliegenden Heizleiter 21 beheizt werden können.

In Figur 12 ist eine alternative Form einer im 90°-abgewinkelten Rohrleitungsführung dargestellt. Der Heizleiter 21 wird durch eine Spannvorrichtung 122 in der Rohrmitte gehalten. Die Spannvorrichtung 122 wird an der Abknickung des Heizleiters 21 durch Verklemmung oder Verschweißung befestigt Durch diese Konstruktion ist es für den Innenheizleiter möglich, der Fließrichtung des Wärmeträgermediums zu folgen. Gegenüber der in Figur 11 dargestellten Ausführungsform werden ein Rohrleitungsstutzen und die externe Leitungsführung gespart.

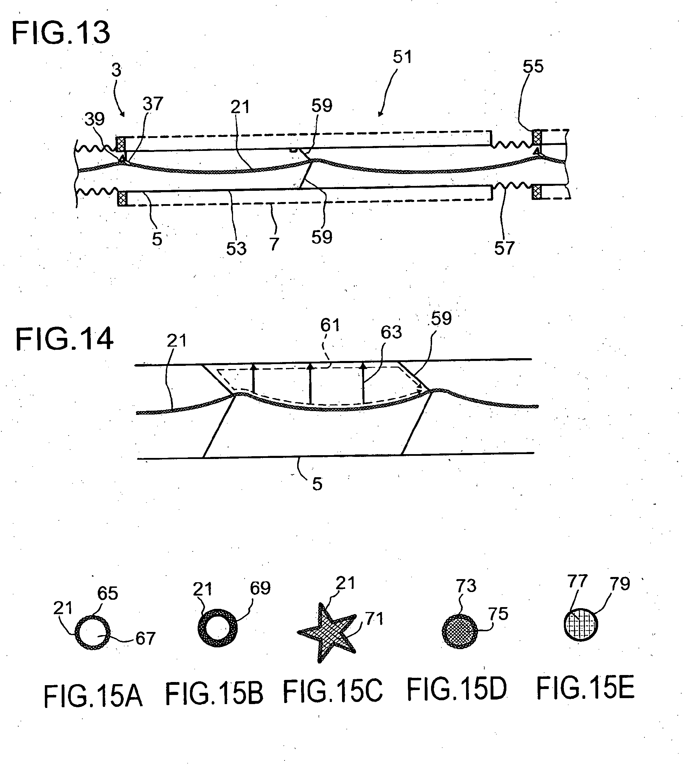

In Figur 13 ist ein Querschnitt durch einen Rohrleitungsabschnitt mit mehreren Segmenten dargestellt.

Eine Solarschleife 3 eines Solarkraftwerkes ist im Allgemeinen in mehrere Segmente 51 geteilt. Jedes dieser Segmente 51 weist einen Rohrleitungsabschnitt 53 auf, der von einem Glasrohr 7 umschlossen ist. Die jeweiligen Segmente 51 dienen dabei jeweils als Receiver zum Einfangen der Sonnenenergie.

Die einzelnen Rohrleitungsabschnitte 53 werden üblicherweise aus einem elektrisch gut leitfähigen Metall, zum Beispiel aus Edelstahl, gefertigt. Um mögliche parasitäre Ströme vom Heizleiter 21 an die Rohrleitung 5 lokal zu begrenzen, ist es bevorzugt, die einzelnen Rohrleitungsabschnitte 53 durch Isolatoren 55 voneinander zu trennen. Als Material für die Isolatoren 55 wird ein Material gewählt, das einen größeren Widerstand aufweist als der Widerstand des als Heizleiter 21 eingesetzten Heizleiters. Als Material für die Isolatoren 55 eignen sich insbesondere hitzebeständige Keramiken, Mineralfaserdichtungen oder Glimmerdichtungen.

Zusätzlich zu den Isolatoren 55 sind die einzelnen Segmente 51 über mechanische Verbindungen oder Kompensatoren 57 miteinander verbunden. Die mechanischen Kompensatoren 57 können notwendig sein, um Längenausdehnungen der Rohrleitungen 5 im Betrieb auszugleichen.

Obwohl der isolierte Heizleiter 21 mit Isolatoren im Inneren der Rohrleitung 5 befestigt werden kann, wie dies beispielhaft in den Figuren 7 und 8 dargestellt ist, ist es vorteilhaft, einige der in Figur 13 gezeigten Isolatoren 55 in einer Solarschleife zu platzieren, um zu verhindern, dass eingespeiste parasitäre Ströme im Rohrsystem akkumulieren.

Neben dem Einsatz in den Rohrleitungen 5 der Solarschleifen 3 kann der erfindungsgemäße Heizleiter 21 zur Innenbeheizung einer Rohrleitung 5 auch zur Beheizung von Sammler 9, Verteiler 15, Wärmeträgerablauf 11 und Wärmeträgerzulauf 13 sowie sämtlicher weiterer von Salzschmelze durchströmten Rohrleitungen genutzt werden. Auch die Anwendung in flexiblen Schlauchleitungen ist bei Einsatz flexibler Leiter möglich.

Da im Allgemeinen der Widerstand eines Metalls temperaturabhängig ist, ist es weiterhin auch möglich, den Heizleiter 21 zur Messung der mittleren Temperatur des Innenheizleiters und mittelbar auch der Salzschmelze in der Rohrleitung 5 zu nutzen. Dieses ist insbesondere dann vorteilhaft, wenn ein Material für den Heizleiter 21 eingesetzt wird, das eine starke Abhängigkeit der spezifischen Leitfähigkeit von der Temperatur aufweist.

Die Befestigung des Heizleiters 21 in der in Figur 13 dargestellten Ausführungsform erfolgt jeweils am Beginn eines Segmentes 51 mit einer Schlinge 37 und einem Haken 39, wie diese in Figur 8 dargestellt sind. Durch die Befestigung mit dem Haken 39 wird der Heizleiter 21 gegen eine Verschiebung innerhalb des Segments 51 gesichert. Die Befestigung des Heizleiters 21 innerhalb des jeweiligen Rohrleitungsabschnittes 53 erfolgt zum Beispiel über federnde Abstandshalter 59. Hierbei kann die Befestigung mit federnden Abstandshaltern an einer oder an mehreren Positionen in dem Rohrleitungsabschnitt 53 des Segments 51 vorgesehen sein. Die federnden Abstandshalter 59 werden dabei vorzugsweise zur Montage in das Rohr eingeschoben und sind nicht mit der Rohrwand verbunden sondern stützen sich nur gegen die Rohrwand ab.

Als Material für die federnden Abstandshalter 59 werden hochwarmfeste Stähle, zum Beispiel St 2.4668, oder Inconel X750 bevorzugt.

Der Verlauf parasitärer Ströme zwischen Heizleiter und Rohrwandung ist beispielhaft in Figur 14 dargestellt.

Bei einer nicht isolierten Befestigung des isolierten Heizleiters 21, zum Beispiel bei Verwendung von federnden Abstandshaltern 59, fließt ein Strom über die federnden Abstandshalter 59 an die Rohrleitung 5. Dies ist beispielhaft mit gestrichelten Pfeilen dargestellt. Die auftretenden parasitären Ströme 61 führen dazu, dass Heizleistung nicht am Heizleiter 21, sondern an anderer Stelle, beispielsweise an der Wandung der Rohrleitung 5 anfällt. Solange die Ströme durch den Heizleiter 21 dominieren, senken parasitäre Ströme 61 zwar die Effizienz der Heizung, gefährden allerdings nicht die Funktion der Heizung durch den Heizleiter 21.

Neben dem parasitären Stromfluss 61 über Befestigungseinrichtungen an die Rohrwand tritt weiterhin ein Stromfluss durch die Salzschmelze aufgrund der hohen Leitfähigkeit der Salzschmelze in der Rohrleitung 5 auf. Dies ist beispielhaft durch Pfeile 63 dargestellt. Wenn die Wandung der Rohrleitung 5 mit erstarrtem, wenig leitfähigem Salz belegt ist, entfällt der Stromfluss 63 durch die Salzschmelze weitgehend.

Der parasitäre Stromfluss 63 durch die Salzschmelze wird bei Verwendung von Edelstahl für den Heizleiter 21 dadurch gemindert, dass sich üblicherweise eine passivierende, ca. 15 µm starke Metalloxid/-Nitratschicht auf dem Edelstahl ausbildet, wobei die Metalloxid/-Nitratschicht dem Stromfluss einen merkbaren Widerstand entgegensetzt.

Weiterhin ist es möglich, dass die angelegte elektrische Spannung zu Korrosion führt, die durch eine elektrochemische Reaktion bedingt ist. Aus diesem Grund ist darauf zu achten, dass die zwischen dem Heizleiter 21 und der Wandung der Rohrleitung 5 liegende elektrische Spannung unterhalb des Grenzpotentials liegt, bei dem eine elektrochemische Reaktion einsetzt.

Beispiele geeigneter Heizleitergeometrien sind in den Figuren 15A bis 15E dargestellt.

Der Heizleiter 21 kann zum Beispiel, wie in Figur 15A dargestellt, als rohrförmiges Seil gestaltet sein. Der Heizleiter 21 ist dabei vorzugsweise aus einem Stahlgeflecht gebildet. Bei Betrieb des Heizleiters 21, der in Form eines rohrförmigen Seils 65 gestaltet ist, schmilzt zunächst das Salz im Inneren des Heizleiters 21, wodurch sich im Inneren des Heizleiters 21 ein Kanal ausbildet, durch den Salzschmelze strömen kann. Den Heizleiter 21 umgebendes Salz, das schmilzt, kann durch Öffnungen im Geflecht, das das rohrförmige Seil 65 bildet, in den inneren Kanal 67 strömen.

Alternativ zu einem rohrförmigen Seil 65, wie dies in Figur 15A dargestellt ist, ist es auch möglich, den Heizleiter 21 in Form eines Rohres 69 zu gestalten. In diesem Fall ist es weiterhin vorteilhaft, das Rohr mit einer Perforation zu versehen, durch die Salzschmelze in das Innere des Rohres strömen kann. Die Funktionsweise des in Figur 15B dargestellten Heizleiters 21 entspricht dabei weitgehend der Funktionsweise des in Figur 15A dargestellten Heizleiters 21.

In Figur 15C ist ein Heizleiter mit einem sternförmigen Querschnitt dargestellt. Ein solcher sternförmiger Querschnitt weist v-förmige Vertiefungen 71 auf. Bei Betrieb des Heizleiters 21 beginnt zunächst das Salz in den v-förmigen Vertiefungen 71 zu schmelzen, so dass sich in den v-förmigen Vertiefungen 71 jeweils ein Kanal ausbildet, durch den die Salzschmelze strömen kann.

Neben der in Figur 15C dargestellten Ausführungsform als 5-zackiger Stern ist auch jede beliebige andere Anzahl an v-förmigen Vertiefungen und damit verbundenen Zacken möglich. Neben v-förmigen Vertiefungen ist es alternativ auch möglich, zum Beispiel u-förmige Vertiefungen vorzusehen.

In Figur 15D ist ein als Stab 73 gestalteter Heizleiter dargestellt, wobei der Stab 73 von einem Geflecht 75, vorzugsweise einem elektrisch leitfähigen Drahtgeflecht, umschlossen ist. Bei Betrieb eines Heizleiters, der wie in Figur 15D dargestellt gestaltet ist, bilden sich zunächst im Geflecht 75 Kanäle aus, durch die die Salzschmelze strömen kann. Anschließend bildet sich ein den Heizleiter 21 umgebender Kanal.

Die in den Figuren 15A bis 15D gestalteten Ausführungsformen erfordern jeweils einen Heizleiter aus einem Material, das in Gegenwart der die Rohrleitung 5 durchströmenden Salzschmelze nicht korrodiert. Hierbei handelt es sich zum Beispiel um Edelstahl, beispielsweise St 1.4571 oder auch St 1.4301.

Edelstähle sind jedoch schlechter stromleitend als beispielsweise Kupfer oder Aluminium, die jedoch im Allgemeinen in dem eingesetzten Salz leicht korrodieren. Um einen Heizleiter aus einem besser als Edelstahl stromleitenden Material einsetzen zu können, ist es zum Beispiel möglich, wie in Figur 15E dargestellt, einen Kern 77 aus einem Material mit sehr guter elektrischer Leitfähigkeit, beispielsweise aus Kupfer oder Aluminium vorzusehen, der von einer korrosionsfesten Beschichtung 79 umschlossen ist. Die korrosionsfeste Beschichtung 79 kann dabei zum Beispiel auch ein korrosionsfestes Rohr sein, das gut wärmeleitend mit dem Kern 77 verbunden ist. Diese Konstruktion bietet die Option, den Innenheizleiter völlig ohne elektrische Isolationsmaßnahmen in einer Rohrleitung zu betreiben.

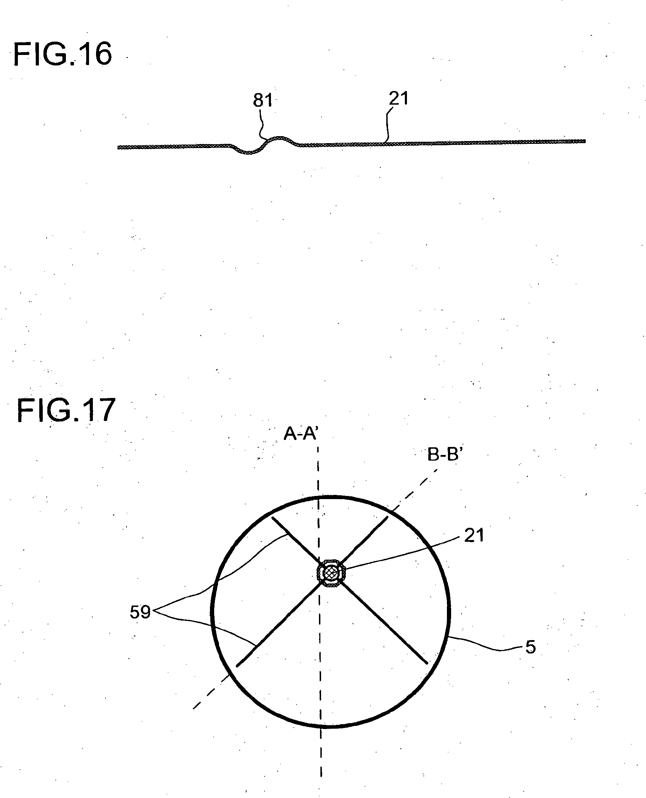

Ein Heizleiter mit einer Querschnittsgeometrie, wie sie in den Figuren 15A bis 15E dargestellt ist, kann flexibel sein oder als steifer Leiter ausgeführt sein. Wenn der Heizleiter 21 als steifer Leiter ausgeführt ist, ist es vorteilhaft, Dehnungsbereiche 81 vorzusehen, um Längenänderungen aufgrund von Temperaturschwankungen auszugleichen. Ein steifer Heizleiter mit Dehnungsbereich 81 ist beispielhaft in Figur 16 dargestellt. Der Dehnungsbereich 81 ist dabei wellenförmig gestaltet. Neben der hier dargestellten wellenförmigen Gestaltung ist auch jede andere Geometrie, die einen Längenausgleich ermöglicht, für die Gestaltung des Dehnungsbereichs 81 geeignet.

In den Figuren 17 bis 19 ist ein Heizleiter dargestellt, der in einer Rohrleitung mit federnden Abstandshaltern gehalten wird.

Die federnden Abstandshalter 59 sind vorzugsweise kreuzförmig angeordnet. Alternativ ist es jedoch auch möglich, zum Beispiel nur drei federnde Abstandshalter 59 vorzusehen, wobei in diesem Fall einer der federnden Abstandshalter 59 vorzugsweise senkrecht ausgerichtet ist. Der senkrecht ausgerichtete federnde Abstandshalter kann dabei entweder unterhalb oder oberhalb des Heizleiters 21 angeordnet sein.

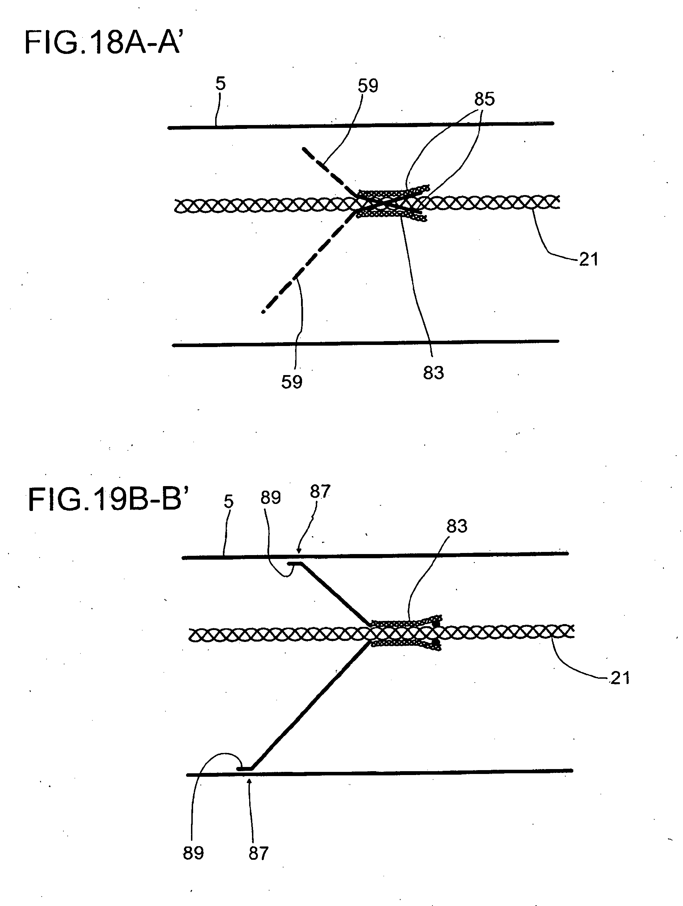

Eine Möglichkeit zur Befestigung der federnden Abstandshalter 59 am Heizleiter 21 ist in Figur 18 dargestellt. Zur Befestigung ist es so zum Beispiel möglich, die federnden Abstandshalter 59 mit einer Hülse 83 zu verklemmen. Hierzu wird die Hülse 83 über den Heizleiter 21 und einen Endabschnitt 85 der federnden Abstandshalter 59 geschoben. Eine zusätzliche Befestigung ist zum Beispiel dadurch möglich, dass die Hülse 83 mit dem Heizleiter 21 verschweißt wird.

Der dem Heizleiter abgewandte Endabschnitt 87 der federnden Abstandshalter 59 ist vorzugsweise zu einem Fuß 89 gebogen. Der Fuß 89 kann dabei zum Beispiel in Form einer Öse gestaltet sein. Mit dem Fuß 89 stützt sich der federnde Abstandshalter 59 an der Wandung der Rohrleitung ab. Dies ist Figur 19 dargestellt. Die Nutzung der federnden Abstandshalter 59, wie sie in den Figuren 17 bis 19 dargestellt sind, dient zur Halterung des Heizleiters 21 auf einer vorgegebenen Höhe in der Rohrleitung 5. Dadurch, dass die federnden Abstandshalter 59 nur durch ihren Federdruck mit ihrem jeweiligen Fuß 89 gegen die Wandung der Rohrleitung 5 gepresst werden, ist es möglich, dass die federnden Abstandshalter 59 mit der Strömung der Salzschmelze in der Rohrleitung 5 bewegt werden. Daher ist es bevorzugt, wie in Figur 13 dargestellt, in regelmäßigen Abständen, vorzugsweise mindestens einmal in jedem Receiver eine Halterung des Heizleiters 21 vorzusehen, wie sie in den Figuren 7 und 8 dargestellt ist.

Die Positionierung der federnden Abstandshalter 59 nur durch Pressung der Füße 89 gegen die Wandung der Rohrleitung 5 hat den Vorteil, dass der Heizleiter 21 samt der federnden Abstandshalter 59 im Bedarfsfall auf einfache Weise aus der Rohrleitung 5 gezogen werden kann. Dies kann zum Beispiel im Fall einer notwendigen Wartung erforderlich sein.

Neben den in Figur 19 dargestellten Füßen ist es auch möglich, die dem Heizleiter abgewandten Endabschnitte 87 der federnden Abstandshalter 59 in jeder beliebigen anderen Form zu gestalten, die einen Halt in der Rohrleitung 5 erlaubt.

Weiterhin ist es auch möglich, die federnden Abstandshalter 59 nicht nur durch ihren Anpressdruck in der Rohrleitung 5 zu halten, sondern die federnden Abstandshalter 59 in der Rohrleitung lösbar, zum Beispiel durch Verschrauben, oder unlösbar, zum Beispiel durch Verschweißen, zu befestigen.

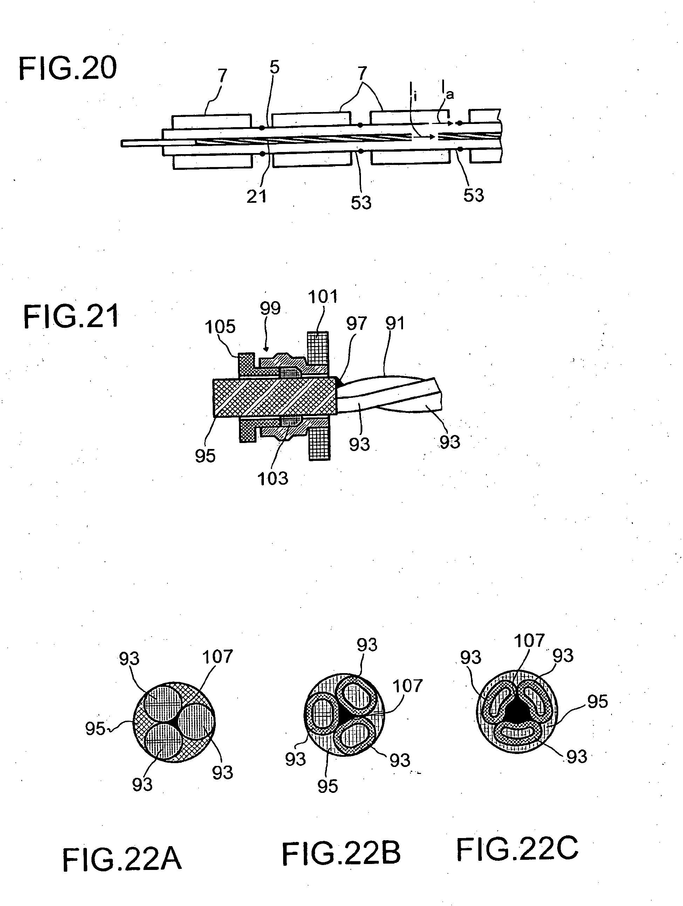

In Figur 20 ist eine lange Rohrleitung 5 von durch Verschweißen miteinander verbundenen Rohrleitungsabschnitten 53, zum Beispiel Receivern einer Solarschleife, dargestellt. Wird der Heizleiter 21 nicht gegen die Kette der miteinander verschweißten Rohrleitungsabschnitte 53 elektrisch isoliert und eine Spannung angelegt, fließt durch die Kette der Rohrleitungsabschnitte 53 ein Strom Iₐ und durch den Innenleiter ein Strom Iᵢ, deren Stromstärkeverhältnis Iᵢ / Iₐ im Verhältnis des Widerstands der Rohrleitung 5 zum Widerstand des Heizleiters 21 steht. Entsprechend dem Verhältnis wird Wärme an der Rohrleitung 5 beziehungsweise am Heizleiter 21 erzeugt. Durch Wahl eines ausreichenden Querschnittes des Heizleiters 21 und Wahl von sehr gut elektrisch leitenden Materialien, beispielsweise Kupfer oder Aluminium, kann der Widerstand des Heizleiters 21 so weit gesenkt werden, dass der Strom ausreichend stark in den Heizleiter 21 hinein geführt und die Wärmeentwicklung auf den Heizleiter 21 konzentriert wird.

In der hier dargestellten Anordnung entstehen über die gesamte Rohrleitung 5 keine Potentialdifferenzen zwischen Heizleiter 21 und Rohrleitung 5. Die Rohrleitung 5 ist gegenüber einem hier nicht dargestellten Apparategerüst, von dem die Rohrleitung 5 getragen wird, elektrisch zu isolieren.

Die Einführung des Heizleiters 21 in den Rohrinnenraum kann im Fall des unisolierten Innenheizleiters einfach durch Klemmverschraubungen gestaltet werden.

In Figur 21 ist ein als Seil ausgebildeter Heizleiter mit Durchführung durch einen Blindflansch dargestellt.

In der hier dargestellten Ausführungsform ist der Heizleiter 21 in Form eines Seiles 91 ausgebildet. Das Seil 91 ist dabei aus mehreren Litzen 93 verdreht.

Hierbei kann das Seil zum Beispiel aus drei Litzen, wie in Figur 21 dargestellt, gefertigt sein oder auch aus einer oder zwei oder mehr als drei Litzen.

Zur Befestigung des als Seil 91 ausgebildeten Heizleiters 21 an einem Endstück eines Rohrleitungsabschnittes 47 ist das Seil 91 mit einem Rundstab 95 verbunden. Die Verbindung des Seiles 91 mit dem Rundstab 95 erfolgt zum Beispiel durch eine Schweißverbindung oder alternativ auch durch Verschrauben oder Verklemmen. Bei einer Klemmverbindung wird der Rundstab 95 auf das Seil 91 aufgeklemmt. In der hier dargestellten Ausführungsform ist das Seil 91 mit einer Schweißverbindung 97 mit dem Rundstab 95 verbunden.

Der Rundstab 95 ist durch eine Stopfbuchsdurchführung 99 durch den Blindflansch 101, mit dem der Rohrleitungsabschnitt 53 abgeschlossen ist, geführt. Zur Befestigung des Rundstabes 95 umfasst die Stopfbuchdurchführung 99 eine Stopfbuchse 103. Diese ist mit einer Klemmhülse 105 verspannt.

Am Rundstab 95 kann eine Spannung angelegt werden, um den als Seil 91 gestalteten Heizleiter 21 mit Spannung zu versorgen.

In den Figuren 22A bis 22C sind Querschnitte unterschiedlicher als Seil ausgebildeter Heizleiter dargestellt.

Die in den Figuren 22A bis 22C dargestellten Seile 91 sind dabei jeweils aus drei Litzen 93 aufgebaut.

In Figur 22A sind die Litzen 93 massiv ausgeführt. Zwischen den einzelnen Litzen bildet sich ein Zwickelkanal 107 aus, durch den schmelzendes Salz beim Wiederaufschmelzen abströmen kann.

In der in Figur 22B dargestellten Ausführungsform sind die Litzen 93 als abgeflachte Rohre gestaltet. Durch die Abflachung bildet sich ein im Vergleich zu der in Figur 22A dargestellten Ausführungsform größerer Zwickelkanal 107 aus. Ein noch vergrößerter Zwickelkanal 107 ergibt sich bei der in Figur 22C dargestellten Ausführungsform, bei der die einzelnen Litzen 93, aus der das Seil 91 verdrillt ist, eine nierenförmige Gestaltung aufweisen.

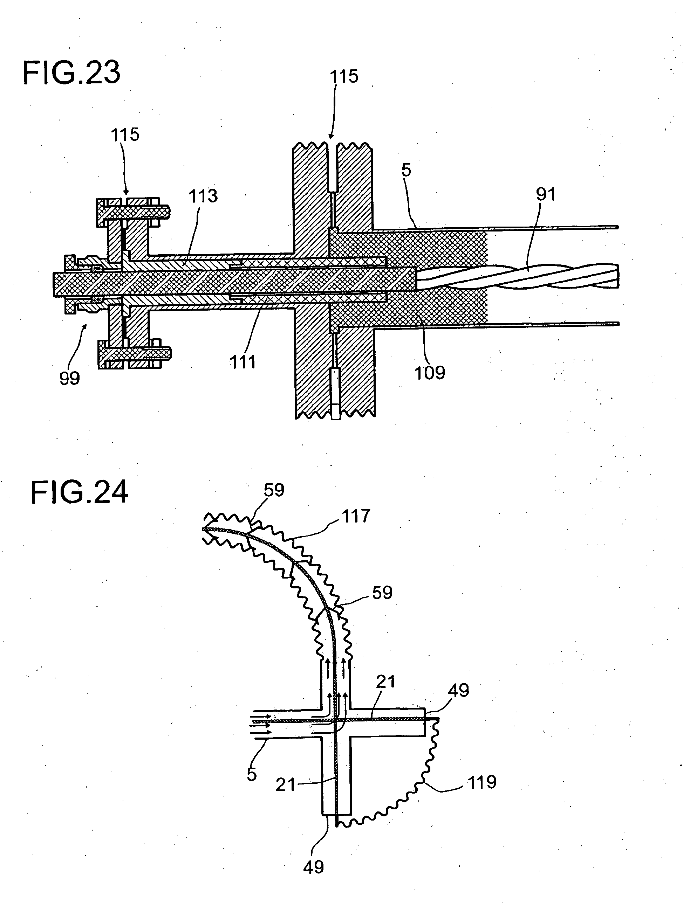

Eine alternative Ausführungsform zur Durchführung des Heizleiters durch einen Endabschnitt einer Rohrleitung ist in Figur 23 dargestellt.

Um die Stopfbuchse mit herkömmlichen Materialien zu gestalten, insbesondere einen Dichtring, der aus einem üblichen Polymer-Material gefertigt ist, ist es notwendig, einen Temperaturgradienten entlang des Heizleiters und des Rundstabes zu realisieren. Der Temperaturgradient wird dadurch eingestellt, indem das Ende der Rohrleitung 5, durch das der Rundstab 95 geführt wird, weniger gut isoliert wird. Zusätzlich kann die Ausbildung eines Gradienten durch eine thermische Innenisolierung der Durchführung des Heizleiters 21 unterstützt werden. Die thermische Innenisolierung lässt sich zum Beispiel durch Einsatz von keramischen Fasern, die eine thermische Beständigkeit von zum Beispiel bis zu 580°C aufweisen, realisieren. Eine entsprechende Füllung mit Keramikfasern ist mit Bezugszeichen 109 bezeichnet.

Der Rundstab 95 ist zunächst von einer ersten Hülse aus einem elektrisch isolierenden und temperaturbeständigen Material, beispielsweise Keramik oder Siliziumcarbid, umschlossen. Die erste Hülse 111 weist vorzugsweise eine Temperaturbeständigkeit von bis zu 580°C auf.

An die erste Hülse 111 schließt sich eine zweite Hülse 113 an. Die zweite Hülse 113 ist aus einem ebenfalls elektrisch isolierenden Material gefertigt, das jedoch eine geringere Temperaturbeständigkeit aufweisen kann. So ist zum Beispiel eine Temperaturbeständigkeit bis 260°C ausreichend. Als Material für die zweite Hülse 113 kann zum Beispiel ein Hochtemperaturkunststoff wie PTFE eingesetzt werden.

An die zweite Hülse 113 schließt sich dann die Stopfbuchsdurchführung 99 an. Hierzu ist die Stopfbuchsdurchführung 99 mit einem Flansch 115 am Rohrleitungsende befestigt.

Der eingesetzte Rundstab 95 enthält vorzugsweise ein gut elektrisch leitendes Material. Hierbei ist es einerseits möglich, den Rundstab vollständig aus dem gut elektrisch leitenden Material zu gestalten oder alternativ einen Kern aus einem gut elektrisch leitfähigen Material vorzusehen, das von einem weniger gut leitenden Material, beispielsweise Stahl umschlossen ist. Als elektrisch gut leitfähiges Material eignen sich zum Beispiel Kupfer oder Aluminium. Besonders bevorzugt wird ein Rundstab 95 mit einem Kupferkern eingesetzt.

In Figur 24 ist eine Führung eines Heizleiters in einer beweglichen Rohrverbindung dargestellt.

Neben einer Strömungsumlenkung, wie sie in den Figuren 10 und 11 dargestellt ist, ist es alternativ auch möglich, zur Strömungsumlenkung zum Beispiel eine bewegliche Rohrverbindung vorzusehen. Hierbei ist ein Rohrbogen 117 aus einem flexiblen Material gefertigt. Hierzu ist es zum Beispiel möglich, den Rohrbogen mit einer wellenförmigen oder einer zickzackförmigen Wandung zu gestalten, um die notwendige Flexibilität zu erlangen.

Um nach einem Einfrieren das Salz im Rohrbogen 117 wieder aufschmelzen zu können, ist es notwendig auch im Rohrbogen 117 einen Heizleiter 21 zu führen. Um zu vermeiden, dass der Heizleiter Kontakt mit den Wandungen des Rohrbogens 117 erhält, wird der Heizleiter 21 zum Beispiel mit einem federnden Abstandshalter 59, wie er in den Figuren 17 und 18 dargestellt ist, in der Rohrleitung fixiert. Der Abstand der einzelnen federnden Abstandshalter 59 wird so gewählt, dass auch bei einem Biegen der Rohrverbindung der Heizleiter 21 nicht in Kontakt mit der Rohrwandung gelangt.

Neben der Umlenkung am Ende einer Solarschleife kann eine bewegliche Rohrverbindung, wie sie in Figur 24 dargestellt ist, zum Beispiel auch zwischen einzelnen Solarreceivern aufgenommen sein, um die Rohrleitung mit den Receivern jeweils an die optimale Position zur Sonne anzupassen.

Wenn zusätzlich zum flexiblen Rohrbogen eine Umlenkung um 90° vorgesehen ist, wie dies in Figur 24 dargestellt ist, ist es vorteilhaft, den Heizleiter aus dem Rohrleitungsabschnitt 47 in einem Blindflansch, beispielsweise wie in den Figuren 21 und 23 dargestellt, aus der Rohrleitung zu führen und am Ende den Heizleiter elektrisch leitend mit einer externen Leitungsführung 119 zu verbinden. Der um 90° gedrehte Rohrleitungsabschnitt 121 endet ebenfalls in einem Verschluss 49, der beispielsweise als Blindflansch ausgeführt ist, und durch den eine Heizleiter 21 geführt ist, der dann durch die bewegliche Rohrverbindung geführt wird.

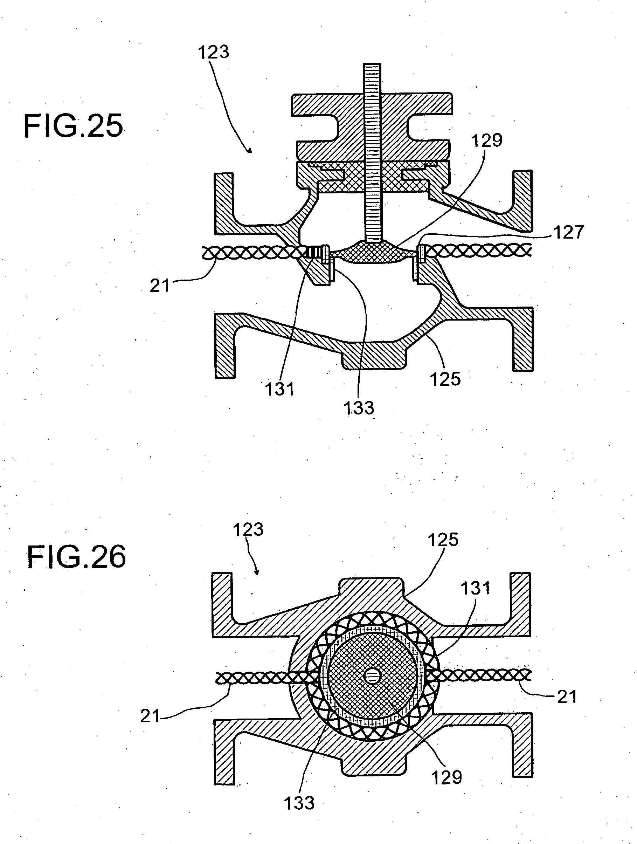

Neben Umlenkung und beweglichen Rohrabschnitten sind üblicherweise in einer Rohrleitung auch Armaturen, beispielsweise Ventile enthalten. Ein Querschnitt durch ein Ventil mit einem darin geführten Heizleiter ist beispielhaft in den Figuren 25 und 26 dargestellt.

Figur 25 zeigt einen Querschnitt durch ein Ventil 123 mit einem darin geführten Heizleiter 21 und Figur 26 zeigt einen Schnitt durch das Ventil aus Figur 25 in Draufsicht.

Ein Ventil umfasst üblicherweise einen Ventilkörper 125 mit einem Ventilsitz 127 sowie ein Schließelemenf 129. Um ein erstarrtes Salz innerhalb des Ventils aufschmelzen zu können, wird der Heizleiter 21 ringförmig entlang des Ventilsitzes 127 geführt. Das bedeutet, dass der Heizleiter einen Heizring 131 ausbildet. Der Heizring 131 ist dabei so positioniert, dass die Schließfunktion des Ventils 123 nicht beeinträchtigt wird. Zudem sollte vermieden werden, dass bei Spannungsführung des Heizleiters 21 eine direkt Verbindung zwischen Heizring 131 und Schließelement 129 entsteht. Aus diesem Grund ist es vorteilhaft, am Ventilsitz 127 eine elektrische Isolierung 133 vorzusehen. In diesem Fall bildet die elektrische Isolierung 133 vorzugsweise den Ventilsitz 127. Um zu vermeiden, dass ein Kurzschlussstrom vom Heizleiter 21 oder Heizring 131 an den Ventilkörper 125 fließt, ist es weiterhin vorteilhaft, den Heizring 131 und den Heizleiter 21 auch gegenüber dem Ventilkörper 125 elektrisch zu isolieren. Hierzu wird zum Beispiel ein elektrisch isolierendes Material, beispielsweise eine Keramik im Bereich, in dem der Heizring 131 am Ventilkörper 125 anliegt, in den Ventilkörper 125 eingebracht. Wesentlich ist hierbei, dass das zur elektrischen Isolierung eingesetzte Material gegenüber den im Ventil auftretenden Armaturen thermisch stabil ist.

Neben der in den Figuren 25 und 26 dargestellten Ausführungsform eines Ventils ist es analog auch möglich, den Heizleiter 21 zum Beispiel über einen Heizring 131 oder durch andere geometrische Gestaltung in anderen Armaturen wie beispielsweise Klappen oder Schiebern zu führen.

### Beispiele

### Beispiel 1

Zur Beheizung einer 200 m langen Rohrleitung wird ein als Edelstahlstab ausgeführter Heizleiter 21 verwendet. Der Heizleiter weist einen Durchmesser von 25 mm auf. Der Heizleiter ist dabei aus Edelstahl St 1.4301 gefertigt.

Der spezifische Widerstand des Heizleiters 21 beträgt 0,00073 Ohm/mm bei einer Arbeitstemperatur von 290 °C. Die zur Beheizung benötigte spezifische Leistung liegt bei 100 W/m. Die zur Beheizung angelegte Spannung beträgt 77,3 V und die Stromstärke 259 A. Die aufgrund der Länge von 200 m benötigte Leistung liegt bei 20 kW. Diese Leistung wird allerdings nur in der sehr kurzen Zeit des Aufschmelzens benötigt.

Wenn zur Beheizung eine höhere Spannung eingesetzt wird, ist es möglich, einen kleineren Querschnitt des Heizleiters zu wählen. Die am Heizleiter abfallende Wärmeleistung kann zum Beispiel über einen Thyristor-geschalteten Pulsbetrieb vermindert werden.

Bei einer Befestigung des Heizleiters in der Rohrleitung 5 über Heizleiterhalter, die nicht elektrisch isoliert sind, wobei die Heizleiterhalter beispielsweise als Federn mit 1,5 mm Durchmesser gestaltet sind, entstehen parasitäre Ströme, zum einen über die Heizleiterhalter an die Rohrwand, als auch durch die elektrisch leitende Salzschmelze. Die entstehenden parasitären Ströme sind beispielhaft in der nachfolgenden Tabelle aufgeführt.

**Tabelle: parasitäre Ströme**

| | Querschnitt | Leitform | Durchmesser | Widerstand | Stromstärke | spezifischer Widerstand |
|---|---|---|---|---|---|---|
| Beschreibung Strompfad | mm² | | mm | Ω | A | Ω/m |
| Strom im Heizleiter | 490,9 | Kreis | 25,0 | 0,0051 | 265,6 | 0,0134 |
| Strom über Heizleiterhalter | 1,77 | Kreis | 1,5 | 0,0267 | | 0,0134 |
| Strom über Außenrohr | 427,3 | Kreis | | 0,0059 | | 0,0134 |
| Summe | | | | 0,0325 | 41,48 | |
| Strom durch Salzschmelze | 181,427 | Rechteck | | 13,62 | 0,10 | 0,0049 |

Die im Vergleich zur Stromstärke im Heizleiter sehr viel geringere Stromstärke über Heizleiterhalter und Außenrohr sowie durch die Salzschmelze zeigt, dass selbst bei einer elektrisch leitenden Verbindung und parasitären Strömen über Heizleiterhalter und durch die Salzschmelze eine ausreichend große Heizleistung im Heizleiter entsteht, um das den Heizleiter 21 umgebende Salz zu schmelzen, wodurch ein den Heizleiter 21 umgebender Kanal entsteht, durch den Salzschmelze strömen kann, um entstehende Drücke aufgrund der Volumenzunahme durch das Schmelzen des Salzes auszugleichen.

### Beispiel 2

Eine Rohrleitung aus Edelstahl 1.4541 weist eine spezifische Leitfähigkeit von 1,7 m/(Ohm·mm²) und einen Innendurchmesser von 65 mm und eine Wandstärke von 2 mm auf. Die Querschnittsfläche der Rohrleitung beträgt 421 mm². Die Leitfähigkeit des Rohres beträgt 716 m/Ohm. Wenn 90% der Wärmeentwicklung an einem in der Rohrleitung enthaltenen Innenleiter erfolgen soll, ist es notwendig, dass der Innenleiter die 10-fache Strommenge aufnimmt. Hierzu benötigt er eine Leitfähigkeit von 7.157 m/Ohm. Kupfer weist bei einer Temperatur von 20°C eine elektrische Leitfähigkeit von 56,2 m/(Ohm·mm²) auf. Damit errechnet sich eine notwendige Querschnittfläche für einen Innenleiter aus Kupfer zu 127 mm². Dies entspricht einem Kupferdraht mit einem Durchmesser von 12,7 mm oder drei Kupferdrähten mit jeweils einem Durchmesser 7,4 mm. Wenn ein Innenleiter aus Aluminium eingesetzt werden soll, so benötigt dieser bei gleicher Leitfähigkeit einen Durchmesser von 15,8 mm.

Aufgrund der sehr viel kleineren Masse und damit der sehr viel kleineren Wärmekapazität des Innenleiters gegenüber der Rohrleitung sind bereits kleinere Durchmesser für den Innenleiter zu dessen bevorzugter Aufheizung ausreichend. Im Allgemeinen ist es ausreichend, wenn sogar weniger als 50 % des Gesamtstromes zum Innenleiter geführt wird. Dies ermöglicht es, den Innenleiter mit einem geringen Durchmesser auszuführen und nur wenig teures, elektrisch gut leitfähiges Material, beispielsweise Kupfer, zu verwenden. Bei einem DN65-Rohrleitungssystem kann es zum Beispiel ausreichend sein, den Heizleiter aus drei Kupferdrähten mit jeweils 5 mm Durchmesser zu gestalten. Die Kupferdrähte werden dabei vorzugsweise zu einem Seil verdrillt.

Zu beachten ist, dass bei einer Temperaturerhöhung die elektrische Leitfähigkeit von Kupfer deutlich schneller sinkt als die Leitfähigkeit von Edelstahl. Allerdings ist die relative Absenkung nicht so groß, dass sie die gezielte Aufheizung des Innenleiters stören könnte. Zu bedenken ist dabei, dass der Innenleiter nicht weit über den Schmelzpunkt der Wärmeträgersalze hinaus erhitzt werden muss.

Als Standardrohrmaterial eingesetzter St 1.4541 weist eine für Stähle niedrige elektrische Leitfähigkeit auf. Es kann hierbei jedoch günstig sein, das Rohrleitungsmaterial, zum Beispiel das Absorberrohr der einzelnen Receiver in einer Solarschleife vollständig oder teilweise aus einem anderen Edelstahl zu fertigen, der eine noch niedrigere Leitfähigkeit aufweist. Ein solcher Stahl ist zum Beispiel St 1.4301. Hierbei muss jedoch auch auf die Korrosionskompatibilität mit dem eingesetzten Wärmeträger geachtet werden.

In Abhängigkeit von der Art der Salzschmelze kann es notwendig sein, einen direkten Kontakt von Kupfer oder Aluminium, das für den Heizleiter eingesetzt wird, mit der Salzschmelze zu vermeiden, um Korrosion am Heizleiter zu vermeiden oder die Stabilität des Salzes nicht zu beeinträchtigen. Eine mögliche Inkompatibilität des Materials des Heizleiters, beispielsweise Kupfer oder Aluminium, mit dem als Wärmeträger eingesetzten Salz kann beispielsweise dadurch gelöst werden, dass die einzelnen Litzen des Heizleiters mit einer äußeren Edelstahlhülle ausgeführt werden.

Alternativ ist es auch möglich, den Innenleiter möglichst nah an einer Wandung der Rohrleitung zu befestigen. Durch die Wahl von hochleitendem Material könnte auf diese ein Stromfluss durch die Rohrleitung auf besonders geeignete Bereiche, zum Beispiel den oberen Bereich der Rohrleitung konzentriert werden. Die Flexibilität und wärmetechnischen Eigenschaften einer solchen Konstruktion sind jedoch schlechter als die für einen innenliegenden Heizleiter.

**Bezugszeichenliste**

| | | | |
|---|---|---|---|
| 1 | Solarfeld | 75 | Geflecht |
| 3 | Solarschleife | 77 | Kern |
| 5 | Rohrleitung | 79 | korrosionsfestes Rohr |
| 7 | Glasrohr | 81 | Dehnungsbereich |
| 9 | Sammler | 83 | Hülse |
| 11 | Wärmeträgerablauf | 85 | Endabschnitt der federnden Abstandshalter 59 |
| 13 | Wärmeträgerzulauf | | |
| 15 | Verteiler evakuierte Blase | 87 | dem Heizleiter abgewandter End-17 abschnitt |
| 19 | erstarrtes Salz | 89 | Fuß |
| 20 | schaumartiger Bereich | 91 | Seil |
| 21 | Heizleiter | 93 | Litze |
| 23 | Hauptspannungsversorgung | 95 | Rundstab |
| 25 | Versorgungsleitung | 97 | Schweißverbindung |
| 27 | Transformator | 99 | Stopfbuchdurchführung |
| 29 | Öse | 101 | Blindflansch |
| 31 | Schlaufe | 103 | Stopfbuchse |
| 33 | isolierende Hülse | 105 | Klemmhülse |
| 35 | Erweiterung | 107 | Zwickelkanal |
| 37 | Schlinge | 109 | keramische Fasern |
| 39 | Haken | 111 | erste Hülse |
| 41 | Hülse | 113 | zweite Hülse |
| 43 | Kanal | 115 | Flansch |
| 45 | Rohrbogen | 117 | Rohrbogen |
| 47 | Rohrleitungsabschnitt | 119 | externe Leitungsführung |
| 49 | Verschluss Segment | 121 | um 90° gedrehter Rohrleitungsab-51 schnitt |
| 53 | Rohrleitungsabschnitt | 122 | Spannvorrichtung |
| 55 | Isolator | 123 | Ventil |
| 57 | mechanischer Kompensator | 125 | Ventilkörper |
| 59 | federnder Abstandshalter | 127 | Ventilsitz |
| 61 | parasitärer Stromfluss | 129 | Schweißelemente |
| 63 | Stromfluss durch die Salzschmelze | 131 | Heizring |
| 65 | rohrförmiges Seil | 133 | elektrische Isolierung |
| 67 | innerer Kanal | | |
| 69 | perforiertes Rohr | | |
| 71 | v-förmige Vertiefung | | |
| 73 | Stab | | |

## Patentansprüche

1. Rohrleitung zur Förderung einer Salzschmelze mit einer gegenüber auftretenden Temperaturen stabilen Rohrwand, wobei im Inneren der Rohrleitung (5) ein Heizleiter (21) zur Beheizung geführt ist und der Heizleiter (21) vorzugsweise nicht an der Innenwand der Rohrleitung (5) anliegt, **dadurch gekennzeichnet, dass** der Heizleiter (21) in Form eines Rohres (69) oder eines Kanals mit beliebigem Querschnitt gestaltet ist und in der Wandung des Rohres oder Kanals Öffnungen ausgebildet sind, oder **dadurch gekennzeichnet, dass** der Heizleiter (21) als ringförmiges Gestrick (65) öder Gewebe ausgebildet ist, oder **dadurch gekennzeichnet, dass** der Heizleiter (21) mindestens eine sich in axialer Richtung erstreckende u-förmige oder v-förmige Vertiefung (71) aufweist.

2. Rohrleitung gemäß Anspruch 1, **dadurch gekennzeichnet, dass** der Heizleiter (21) azentrisch in der Rohrleitung (5) angeordnet ist, wobei der Abstand des Heizleiters (21) bei einem mit einer maximalen Steigung von 45° verlaufenden Rohrabschnitt nach unten größer ist als nach oben.

3. Rohrleitung gemäß Anspruch 1, **dadurch gekennzeichnet, dass** der Heizleiter (21) zentrisch in der Rohrleitung (5) angeordnet, wenn die Rohrleitung (5) eine Steigung von mehr als 45° aufweist.

4. Rohrleitung gemäß einem der Ansprüche 1 bis 3, **dadurch gekennzeichnet, dass** der Heizleiter (21) in Ösen (29) in der von der Salzschmelze durchströmten Rohrleitung (5) geführt ist.

5. Rohrleitung gemäß Anspruch 4, **dadurch gekennzeichnet, dass** auf den Heizleiter (21) ein Isolator (33) aufgebracht ist und der Heizleiter (21) mit dem Isolator (33) in der Öse (29) befestigt ist.

6. Rohrleitung gemäß einem der Ansprüche 1 bis 3, **dadurch gekennzeichnet, dass** der Heizleiter (21) mit federnden Abstandshaltern im Inneren der Rohrleitung (5) befestigt ist.

7. Rohrleitung gemäß einem der Ansprüche 1 bis 3, **dadurch gekennzeichnet, dass** an dem Heizleiter (21) Schlingen (37) angebracht sind, die in Befestigungshaken (39) eingehängt werden, um den Heizleiter (21) in der Rohrleitung (5) zu befestigen.

8. Rohrleitung gemäß einem der Ansprüche 1 bis 7, **dadurch gekennzeichnet, dass** die Rohrleitung (5) ein innenliegendes Rohr umfasst, das von der Salzschmelze durchströmt wird.

9. Rohrleitung gemäß einem der Ansprüche 1 bis 8, **dadurch gekennzeichnet, dass** der Heizleiter (21) in Heizleitersegmente geteilt ist, wobei die Heizleitersegmente mit niedrigem elektrischen Widerstand verbunden sind.

10. Rohrleitung gemäß einem der Ansprüche 1 bis 9, **dadurch gekennzeichnet, dass** die Rohrleitung (5) in einzelne Segmente (51) geteilt ist.

11. Rohrleitung gemäß Anspruch 9 und 10, **dadurch gekennzeichnet, dass** die Länge der Heizleitersegmente der Länge eines oder mehrerer Segmente (51) der Rohrleitung (5) entspricht.

12. Rohrleitung gemäß einem der Ansprüche 1 bis 11, **dadurch gekennzeichnet, dass** die Rohrleitung (5) eine Rohrleitung in einem Solarfeld (1) eines Parabolrinnensolarkraftwerkes ist.

13. Rohrleitung gemäß einem der Ansprüche 1 bis 12, **dadurch gekennzeichnet, dass** Rohrbögen (45) zur Strömungsumlenkung jeweils einen Rohrleitungsabschnitt (47) aufweisen, der sich in Richtung der Rohrleitung (5) fortsetzt, wobei der Rohrleitungsabschnitt (47) mit einem Verschluss (49) verschlossen ist und der Heizleiter (21) durch den Verschluss (49) des Rohrleitungsabschnitts (47) geführt ist.

14. Rohrleitung gemäß Anspruch 13, **dadurch gekennzeichnet, dass** der Verschluss (49) des Rohrleitungsabschnitts (47) als Blindflansch ausgeführt ist.

15. Rohrleitung gemäß einem der Ansprüche 1 bis 14, **dadurch gekennzeichnet, dass** das Öberflächenmaterial für den Heizleiter (21) ausgewählt ist aus gegen Nitrat korrosionsbeständigen Edelstahl.

16. Rohrleitung, gemäß einem der Ansprüche 1 bis 15, dass der Heizleiter (21) unisoliert in der Rohrleitung geführt wird.

17. Rohrleitung nach Anspruch 16, **dadurch gekennzeichnet, dass** der Heizleiter (21) aus mehreren Rohren gefertigt ist, die mit einem elektrisch gut leitenden Material gefüllt sind.

18. Verwendung einer Salzschmelze enthaltend Natriumnitrat und Kaliumnitrat, wobei der Anteil an Natriumnitrat mindestens 60 Gew.-% beträgt als Wärmeträger in einem Solarkraftwerk, wobei das Solarkraftwerk mindestens eine Rohrleitung gemäß einem der Ansprüche 1 bis 17 enthält.

## Claims

1. A pipeline for carrying a molten salt, with a pipe wall that is stable with respect to the temperatures occurring, a heating conductor (21) being provided inside the pipeline (5) for heating and the heating conductor (21) preferably not lying against the inner wall of the pipeline (5), wherein the heating conductor (21) is designed in the form of a tube (69) or a channel of any desired crosssection and openings are formed in the wall of the tube or channel or wherein the heating conductor (21) is designed as an annular knit (65) or weave or wherein the heating conductor (21) has at least one u-shaped or v-shaped depression (71) extending in the axial direction.

2. The pipeline according to claim 1, wherein the heating conductor (21) is arranged off-center in the pipeline (5), the distance of the heating conductor (21) in the downward direction being greater than in the upward direction in the case of a length of pipe running with a maximum gradient of 45°.

3. The pipeline according to claim 1, wherein the heating conductor (21) is arranged centrally in the pipeline (5) if the pipeline (5) has a gradient of more than 45°.

4. The pipeline according to one of claims 1 to 3, wherein the heating conductor (21) is passed through eyelets (29) in the pipeline (5) through which the molten salt flows.

5. The pipeline according to claim 4, wherein an insulator (33) is applied to the heating conductor (21) and the heating conductor (21) is attached with the insulator (33) in the eyelet (29).

6. The pipeline according to one of claims 1 to 3, wherein the heating conductor (21) is attached by resilient spacers inside the pipeline (5).

7. The pipeline according to one of claims 1 to 3, wherein the heating conductor (21) is provided with loops (37), which are suspended in attachment hooks (39) in order to attach the heating conductor (21) in the pipeline (5).

8. The pipeline according to one of claims 1 to 7, wherein the pipeline (5) comprises an inner pipe, through which the molten salt flows.

9. The pipeline according to one of claims 1 to 8, wherein the heating conductor (21) is divided into heating conductor segments, the heating conductor segments being connected with low electrical resistance.

10. The pipeline according to one of claims 1 to 9, wherein the pipeline (5) is divided into individual segments (51).

11. The pipeline according to claims 9 and 10, wherein the length of the heating conductor segments corresponds to the length of one or more segments (51) of the pipeline (5).

12. The pipeline according to one of claims 1 to 11, wherein the pipeline (5) is a pipeline in a solar array (1) of a parabolic-trough solar power plant.

13. The pipeline according to one of claims 1 to 12, wherein pipe bends (45) for flow deflection each have a length of pipeline (47) that continues in the direction of the pipeline (5), the length of pipeline (47) being closed by a closure (49) and the heating conductor (21) being passed through the closure (49) of the length of pipeline (47).

14. The pipeline according to claim 13, wherein the closure (49) of the length of pipeline (47) is configured as a blind flange.

15. The pipeline according to one of claims 1 to 14, wherein the surface material for the heating conductor (21) is chosen from high-grade steel that is corrosion-resistance to nitrate.

16. The pipeline according to one of claims 1 to 15, wherein the heating conductor (21) is made to pass through the pipeline uninsulated.

17. The pipeline according to claim 16, wherein the heating conductor (21) is produced from a number of pipes that are filled with a material with good electrical conduction.

18. The use of a molten salt comprising sodium nitrate and potassium nitrate, the proportion of sodium nitrate being at least 60% by weight, as a heat transfer medium in a solar power plant, the solar power plant comprising at least one pipeline according to one of claims 1 to 17.

## Revendications

1. Conduit tubulaire pour le transport de sel fondu avec une paroi tubulaire stable à l'égard des températures appliquées, dans lequel un conducteur de chauffage (21) est mené à l'intérieur du conduit tubulaire (5) pour le chauffage et le conducteur de chauffage (21) ne repose de préférence pas sur la paroi intérieure du conduit tubulaire (5), **caractérisé en ce que** le conducteur de chauffage (21) est configuré à la forme d'un tube (69) ou d'un canal de section transversale quelconque et des ouvertures sont formées dans la paroi du tube ou du canal, ou **caractérisé en ce que** le conducteur de chauffage (21) est réalisé sous forme de tricot (65) ou de tissu annulaire, ou **caractérisé en ce que** le conducteur de chauffage (21) présente au moins un creux en forme de u ou en forme de v (71) s'étendant en direction axiale.

2. Conduit tubulaire selon la revendication 1, **caractérisé en ce que** le conducteur de chauffage (21) est disposé de façon acentrique dans le conduit tubulaire (5), dans lequel la distance du conducteur de chauffage (21), pour une section de tube s'étendant avec une pente maximale de 45°, est plus grande vers le bas que vers le haut.

3. Conduit tubulaire selon la revendication 1, **caractérisé en ce que** le conducteur de chauffage (21) est disposé centralement dans le conduit tubulaire (5), lorsque le conduit tubulaire (5) présente une pente de plus de 45°.

4. Conduit tubulaire selon l'une quelconque des revendications 1 à 3, **caractérisé en ce que** le conducteur de chauffage (21) est guidé dans des oeillets (29) dans le conduit tubulaire (5) parcouru par le sel fondu.

5. Conduit tubulaire selon la revendication 4, **caractérisé en ce qu'**un isolateur (33) est installé sur le conducteur de chauffage (21) et le conducteur de chauffage (21) est fixé avec l'isolateur (33) dans l'oeillet (29).

6. Conduit tubulaire selon l'une quelconque des revendications 1 à 3, **caractérisé en ce que** le conducteur de chauffage (21) est fixé à l'intérieur du conduit tubulaire (5) avec des écarteurs à ressort.

7. Conduit tubulaire selon l'une quelconque des revendications 1 à 3, **caractérisé en ce que** des boucles (37) sont installées sur le conducteur de chauffage (21), qui sont suspendues dans des crochets de fixation (39) afin de fixer le conducteur de chauffage (21) dans le conduit tubulaire (5).

8. Conduit tubulaire selon l'une quelconque des revendications 1 à 7, **caractérisé en ce que** le conduit tubulaire (5) comprend un tube interne, qui est parcouru par le sel fondu.

9. Conduit tubulaire selon l'une quelconque des revendications 1 à 8, **caractérisé en ce que** le conducteur de chauffage (21) est divisé en segments de conducteur de chauffage, dans lequel les segments de conducteur de chauffage sont reliés avec une faible résistance électrique.

10. Conduit tubulaire selon l'une quelconque des revendications 1 à 9, **caractérisé en ce que** le conduit tubulaire (5) est divisé en segments individuels (51).

11. Conduit tubulaire selon la revendication 9 et 10, **caractérisé en ce que** la longueur des segments de conducteur de chauffage correspond à la longueur d'un ou de plusieurs segments (51) du conduit tubulaire (5).

12. Conduit tubulaire selon l'une quelconque des revendications 1 à 11, **caractérisé en ce que** le conduit tubulaire (5) est un conduit tubulaire dans un champ solaire (1) d'une centrale solaire cylindroparabolique.

13. Conduit tubulaire selon l'une quelconque des revendications 1 à 12, **caractérisé en ce que** des courbes tubulaires (45) destinées à la déviation de l'écoulement présentent respectivement une section de conduit tubulaire (47), qui se prolonge dans la direction du conduit tubulaire (5), dans lequel la section de conduit tubulaire (47) est fermée avec une fermeture (49) et le conducteur de chauffage (21) est mené à travers la fermeture (49) de la section de conduit tubulaire (47).

14. Conduit tubulaire selon la revendication 13, **caractérisé en ce que** la fermeture (49) de la section de conduit tubulaire (47) est réalisée en forme de bride aveugle.

15. Conduit tubulaire selon l'une quelconque des revendications 1 à 14, **caractérisé en ce que** le matériau de surface pour le conducteur de chauffage (21) est choisi parmi les aciers spéciaux résistant à la corrosion par le nitrate.

16. Conduit tubulaire selon l'une quelconque des revendications 1 à 15, **caractérisé en ce que** le conduit de chauffage (21) est mené sans isolation dans le conduit tubulaire.

17. Conduit tubulaire selon la revendication 16, **caractérisé en ce que** le conducteur de chauffage (21) est fabriqué en plusieurs tubes, qui sont remplis avec un matériau bon conducteur de l'électricité.

18. Utilisation d'un sel fondu contenant du nitrate de sodium et du nitrate de potassium, dans laquelle la part de nitrate de sodium vaut au moins 60 % en poids, comme porteur de chaleur dans une centrale thermique solaire, dans laquelle la centrale thermique solaire contient au moins un conduit tubulaire selon l'une quelconque des revendications 1 à 17.
